(19) Europäisches Patentamt / European Patent Office / Office européen des brevets

(11) **EP 4 412 125 B1**

## (12) EUROPEAN PATENT SPECIFICATION

(45) Date of publication and mention
of the grant of the patent:
**29.10.2025 Bulletin 2025/44**

(51) International Patent Classification (IPC):
$H04L\ 1/1825^{(2023.01)}$     $H04L\ 1/1867^{(2023.01)}$
$H04L\ 5/00^{(2006.01)}$

(21) Application number: **24183529.7**

(22) Date of filing: **13.05.2021**

(52) Cooperative Patent Classification (CPC):
**H04L 1/1825; H04L 1/1887; H04L 1/1896;
H04L 5/0044; H04L 5/0055**

(54) **SELECTING A RETRANSMISSION MODE BASED ON A MINIMUM TIME DURATION**

AUSWAHL EINES NEUÜBERTRAGUNGSMODUS BASIEREND AUF EINER MINIMALEN
ZEITDAUER

SÉLECTION D'UN MODE DE RETRANSMISSION SUR LA BASE D'UNE DURÉE MINIMALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2020 US 202063024425 P
16.04.2021 PCT/IB2021/053175**

(43) Date of publication of application:
**07.08.2024 Bulletin 2024/32**

(62) Document number(s) of the earlier application(s) in
accordance with Art. 76 EPC:
**21735753.2 / 4 150 821**

(73) Proprietor: **Lenovo (Singapore) Pte. Ltd
New Tech Park 556741 (SG)**

(72) Inventors:
• **GANESAN, Karthikeyan
64569 Nauheim (DE)**

• **BASU MALLICK, Prateek
63303 Dreieich (DE)**
• **LÖHR, Joachim
65203 Wiesbaden (DE)**
• **KUCHIBHOTLA, Ravi
Clarendon Hills, 60514 (US)**

(74) Representative: **Openshaw & Co.
8 Castle Street
Farnham, Surrey GU9 7HR (GB)**

(56) References cited:
**WO-A1-2019/032087     WO-A1-2020/068252**

• **HUAWEI ET AL: "Discussion on HARQ support
for NR sidelink", vol. RAN WG2, no. Spokane,
USA;, 12 November 2018 (2018-11-12),
XP051557701, Retrieved from the Internet
<URL:http://www.3gpp.org/ftp/Meetings%
5F3GPP%5FSYNC/RAN2/Docs/R2%2D1818198%
2Ezip> [retrieved on 20181112]**

**Description**

CROSS-REFERENCE TO RELATED APPLICATIONS

This application claims priority to United States Provisional Patent Application Number 63/024,425 entitled "MIXED BLIND RETRANSMISSION AND HARQ FEEDBACK-BASED TRANSMISSION" and filed on May 13, 2020 for Karthikeyan Ganesan, Prateek Basu Mallick, Joachim Loehr, and Ravi Kuchibhotla. This application claims priority to International Patent Application Number PCT/IB2021/053175 entitled "COMBINED BLIND AND FEEDBACK BASED RETRANSMISSION" and filed on April 16, 2021 for Prateek Basu Mallick, Karthikeyan Ganesan, Joachim Loehr, and Ravi Kuchibhotla.

FIELD

The subject matter disclosed herein relates generally to wireless communications and more particularly relates to supporting a mixture of blind retransmission and HARQ feedback-based transmission.

BACKGROUND

In certain wireless communication systems supporting sidelink ("SL") communication, a transmitting User Equipment ("UE") may seek Hybrid Automatic Repeat Request ("HARQ") feedback to determine if further retransmission needs to be made.

BRIEF SUMMARY

Disclosed are procedures for supporting a mixture of Blind Retransmission ("BR") and HARQ Feedback-Based Transmission ("HFBT"). Said procedures may be implemented by apparatus, systems, methods, or computer program products.

One method of a User Equipment ("UE") includes determining a minimum time duration between a first resource for hybrid automatic repeat request ("HARQ") transmission of the transport block ("TB") and a second resource for HARQ transmission of the TB. Here, the minimum time duration comprises a sum of: a first time to receive HARQ feedback, a second time to determine whether to perform retransmissions of the TB, and a third time to retransmit the TB. The method includes selecting a retransmission mode based on the minimum time duration, wherein the retransmission mode comprises one of: a blind retransmission ("BR") mode and a HARQ feedback-based transmission ("HFBT") mode and selecting sidelink resources for retransmission of the TB based on the selected retransmission mode.

BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:

Figure 1 is a schematic block diagram illustrating one embodiment of a wireless communication system for supporting a mixture of BR and HFBT;
Figure 2A is a block diagram illustrating one embodiment of a 5G New Radio ("NR") protocol stack;
Figure 2B is a block diagram illustrating one embodiment of a PC5 protocol stack;
Figure 3 is a diagram illustrating one embodiment of a procedure for sensing and resource (re-)selection;
Figure 4A is a diagram illustrating one embodiment of a timeline of sensing and resource (re-)selection procedure;
Figure 4B is a diagram illustrating one embodiment of a timeline of sensing and resource (re-)selection procedure with re-evaluation;
Figure 5 is a diagram illustrating one embodiment of mixed feedback based transmissions;
Figure 6 is a diagram illustrating one embodiment of a user equipment apparatus that may be used for supporting a mixture of BR and HFBT;
Figure 7 is a diagram illustrating one embodiment of a network apparatus that may be used for supporting a mixture of BR and HFBT;
Figure 8 is a flowchart diagram illustrating one embodiment of a first method for supporting a mixture of BR and HFBT.

DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatus for supporting a mixture of BR and HFBT. In NR V2X, a transmitting UE may either choose to seek HARQ feedback to determine if further retransmission needs to be made, or may make certain number of Blind retransmissions, i.e., retransmissions without seeking HARQ feedback for a certain transmission.

In R16 Sidelink ("SL") V2X, there can be another mode of (re)transmission supporting a mix of blind and feedback-based retransmissions of the same TB, in order to achieve some Sidelink performance benefit. Although it is possible to dynamically enable/disable (seek/ not-seek) SL HARQ feedback in SL PHY using sidelink control information, it creates a number of issues e.g., MAC may not be sure why it has not received a feedback when a feedback is expected and may take wrong decision (e.g., conclude to make a re-transmission); or MAC may receive feedback that is not expected since no feedback was sought. Also, the RRC configuration of enabling/ disabling HARQ feedback per logical channel is not intended for such a mix of HARQ-feedback-based retransmissions.

This disclosure provides solutions to support a mixture of blind retransmission and HARQ feedback-based transmission and vice versa for a TB from Resource Allocation mode 2, e.g., by taking into considering following factors:

- Minimum time gap between consecutive resources satisfying the HARQ Round Trip Time ("RTT") requirement of a TB,
- Resource pool with Physical Sidelink Feedback Channel ("PSFCH") resource and
- Resource pool without PSFCH resource

In some embodiments, Sidelink Control Information ("SCI") may carry a HARQ feedback request flag, e.g., allowing a mix of BR and HFBT for one TB. In some embodiments, a UE may start with blind retransmissions to gain minimum level of link budget and collision resolution and continue with feedback-based retransmissions for fine-tuned resource usage.

For HARQ feedback, when PSFCH resource is (pre-)configured in the resource pool, a mix of blind and feedback-based retransmissions is supported and is up to UE implementation, subject to the total count of maximum number of (re)transmissions and in-order HARQ operation.

In that case, it is important to clarify the following aspects: Physical Sidelink Shared Channel ("PSSCH") resource being acknowledged. PSFCH is to be sent in response to PSSCH which is scheduled by SCI carrying the feedback request, and not the PSSCH being reserved in future. In-order or out-of-order operation: In Uu, it is not allowed to schedule a retransmission for a TB before the feedback for the same TB due to UE implementation complications as well as HARQ procedure complications. The same principle should be applied in SL.

The important difference arising with dynamic HARQ feedback on/off, is a careful consideration when the out-of-order HARQ restriction should be applied or not. The following scenarios are considered: 1) B2B (blind-to-blind). In this case, no Out-of-Order ("OO") HARQ restriction is needed. 2) B2F (blind-to-feedback). In this case, also no OO HARQ restriction is needed. 3) F2F (feedback-to-feedback). The OO HARQ restriction is required for typical UE implementation assumption and for reasonable specification complexity in this case. 4) F2B (feedback-to-blind). The OO HARQ restriction is required for typical UE implementation assumption and for reasonable specification complexity in this case.

In various embodiments, a new higher layer parameter during Mode 2 initial resource selection trigger informs the Tx UE about the requirement of minimum time gap between consecutive resources based on the HARQ RTT, RP with PSFCH and RP without PSFCH resource.

In some embodiments, a new resource (re)selection trigger during resource re-evaluation step before or at m-T3 informs UE to re-select resources based on the minimum HARQ RTT time gap, RP with PSFCH and RP without PSFCH resource. The Tx UE may be configured with one or more condition for switching from blind retransmission to HARQ feedback-based retransmission or vice versa - based on CSI reports, CBR measurements, remaining PDB, etc.

In some embodiments, the MAC layer will further indicate to PHY when to signal in the SCI whether HARQ feedback is enabled for a transmission or not and also the HARQ feedback option. Deciding in MAC layer whether and when to switch from BR to HARQ feedback enabled mode allows for some simple implementation as the HARQ protocol is running the MAC layer, e.g., MAC layer expects a feedback from PHY when HARQ feedback is enabled. Further, HARQ protocol aspects (decision whether to transmit new TB or further retransmission of a TB is also made in MAC layer based on PSFCH feedback for example).

Restriction on the number of outstanding reserved resources at the time of initial resource (re)-selection trigger based on the priority of the packet transmission, number of re-transmissions for a TB, remaining PDB, MCR, CSI reports. Condition for transmission on the reserved resource based on the priority value of the current packet versus the priority value of the reserved resource, otherwise CBR value, CSI reports, etc.

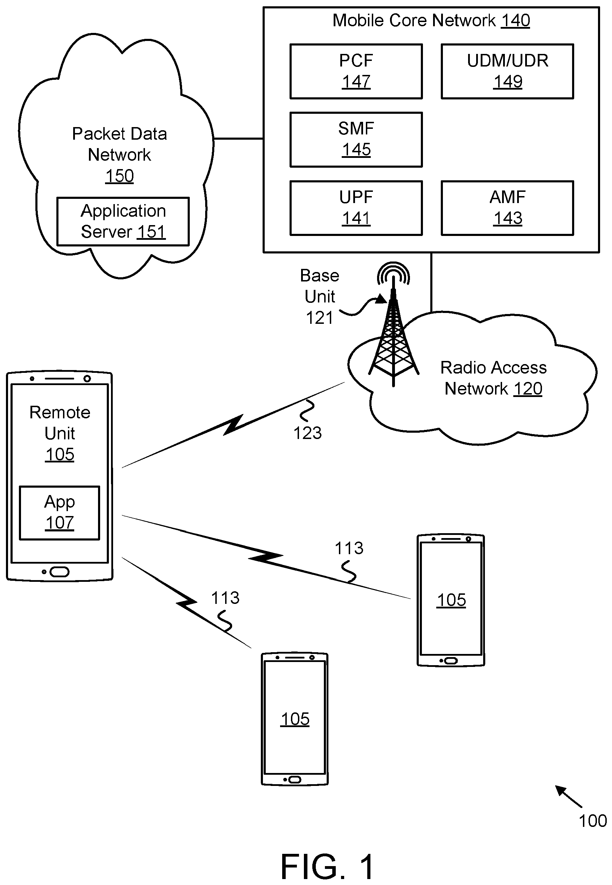

Figure 1 depicts a wireless communication system 100 for supporting a mixture of BR and HFBT, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 121 with which the remote unit 105 communicates using wireless communication links 123. Even though a specific number of remote units 105, base units 121, wireless communication links 123, RANs 120, and mobile core networks 140 are depicted in Figure 1, one of skill in the art will recognize that any number of remote units 105, base units 121, wireless communication links 123, RANs 120, and mobile core networks 140 may be included in the wireless communication system 100.

In one implementation, the RAN 120 is compliant with the 5G system specified in the Third Generation Partnership Project ("3GPP") specifications. For example, the RAN 120 may be a New Generation RAN ("NG-RAN"), e.g., implementing NR RAT and/or Long-Term Evolution ("LTE") RAT. In another example, the RAN 120 may include non-3GPP RAT (e.g., Wi-Fi® or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Here, the RAN 120 is an intermediate network that provides the remote units 105 with access to the mobile core network 140. Additionally, one remote unit 105 may communicate directly with another remote unit 105 (i.e., without relaying via a base unit 121) using sidelink ("SL") communication signals 113. In certain embodiments, the SL communication employs a PC5 interface.

In some embodiments, the remote units 105 communicate with an application server 151 via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the RAN 120. The mobile core network 140 then relays traffic between the remote unit 105 and the application server 151 in the packet data network 150 using the PDU session. The PDU session represents a logical connection between the remote unit 105 and the User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 140 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121. Note that during NR operation on shared spectrum (also referred to as "NR-U" operation), the base unit 121 and the remote unit 105 communicate over unlicensed radio spectrum.

In one embodiment, the mobile core network 140 is a 5GC or an Evolved Packet Core ("EPC"), which may be coupled to a packet data network 150, like the Internet and private data networks, among other data networks. A remote unit 105 may have a subscription or other account with the mobile core network 140. Each mobile core network 140 belongs to a single Public Land Mobile Network ("PLMN"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the RAN 120, a Session Management Function ("SMF") 145, a Policy Control Function ("PCF") 147, and a Unified Data Management function ("UDM"). In some embodiments, the UDM is co-located with a User Data Repository ("UDR"), depicted as combined entity "UDM/UDR" 149. In various embodiments, the mobile core network 140 may also include an Authentication Server Function ("AUSF"), a Network Repository Function ("NRF") (used by the various NFs to discover and communicate with each other over Application Programming Interfaces ("APIs")), or other NFs defined for the 5GC. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. A network instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed.

Although specific numbers and types of network functions are depicted in Figure 1, one of skill in the art will recognize that any number and type of network functions may be included in the mobile core network 140. Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 145 may be mapped to a control plane portion of a PGW and/or to an MME, the UPF 141 may be mapped to an SGW and a user plane portion of the PGW, the UDM/UDR 149 may be mapped to an HSS, etc.

In various embodiments, the remote units 105 may communicate directly with each other (e.g., device-to-device communication) using SL communication signals 113. In one embodiment, the SL communication signals support V2X (vehicle-to-everything) communications. A remote unit 105 may be provided with different V2X communication resources for different V2X modes. V2X Resource Allocation Mode-1 refers to NR-based SL communication on network-scheduled resources. In this mode, the SL resources are allocated by a base unit 121, e.g., for in-range remote units 105.

In contrast, V2X Resource Allocation Mode-2 corresponds to a NR-based SL communication using UE-scheduled resources. This mode features autonomous resource selection by a remote unit 105 based on a sensing procedure. In various embodiments, the sensing takes place over a specific (e.g., pre-configured) resource pool. A remote unit 105 with SL data and/or control signaling to transmit then selects resources for transmission and re-transmission, so long as the resources are not in use by other remote units 105 with higher priority traffic.

In certain embodiments, a remote unit 105 may occupy resources for an appropriate amount of time until a re-selection event is triggered. The resources can be reserved by a remote unit 105 for different purposes such as blind re-transmissions and HARQ feedback-based re-transmissions where the information about the reservation of resources is indicated in Sidelink Control Information ("SCI").

In some embodiments, when a UL transmission conflicts (i.e., overlaps in the time-domain) with a SL transmission (e.g., SL Synchronization Signal Block ("SSB") transmission), a remote unit 105 prioritizes the UL transmission over the SL transmission.

While Figure 1 depicts components of a 5G RAN and a 5G core network, the described embodiments for supporting a mixture of BR and HFBT apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

In the following descriptions, the term "RAN node" is used for the base station but it is replaceable by any other radio access node, e.g., gNB, eNB, Base Station ("BS"), Access Point ("AP"), etc. Further, the operations are described mainly in the context of 5G NR. However, the proposed solutions/methods are also equally applicable to other mobile communication systems supporting a mixture of BR and HFBT.

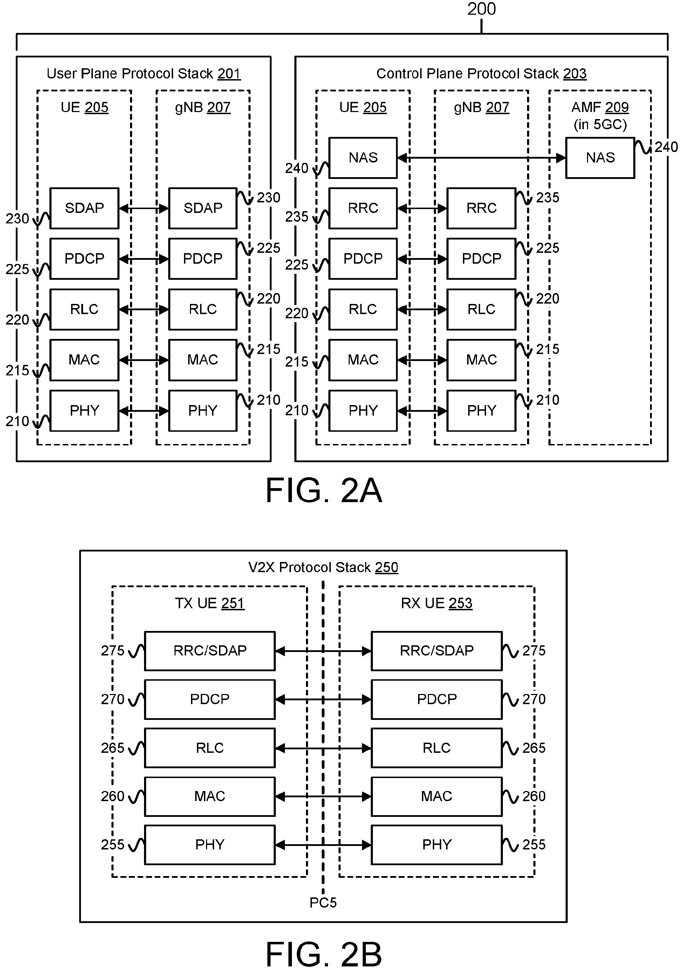

Figure 2A depicts a NR protocol stack 200, according to embodiments of the disclosure. While Figure 2A shows the UE 205, the RAN node 207 and an AMF 209 in a 5G core network ("5GC"), these are representative of a set of remote units 105 interacting with a base unit 121 and a mobile core network 140. As depicted, the protocol stack 200 comprises a User Plane protocol stack 201 and a Control Plane protocol stack 203. The User Plane protocol stack 201 includes a physical ("PHY") layer 210, a Medium Access Control ("MAC") layer 215, the Radio Link Control ("RLC") layer 220, a Packet Data Convergence Protocol ("PDCP") layer 225, and Service Data Adaptation Protocol ("SDAP") layer 230. The Control Plane protocol stack 203 includes a physical layer 210, a MAC layer 215, a RLC layer 220, and a PDCP layer 225. The Control Plane protocol stack 203 also includes a Radio Resource Control ("RRC") layer 235 and a Non-Access Stratum ("NAS") layer 240.

The AS protocol stack for the Control Plane protocol stack 203 consists of at least RRC, PDCP, RLC and MAC layers, and the physical layer. The AS protocol stack for the User Plane protocol stack 201 consists of at least SDAP, PDCP, RLC and MAC layers, and the physical layer. The Layer-2 ("L2") is split into the SDAP, PDCP, RLC and MAC layers. The Layer-3 ("L3") includes the RRC layer 235 and the NAS layer 240 for the control plane and includes, e.g., an Internet Protocol ("IP") layer or PDU Layer (note depicted) for the user plane. L1 and L2 are referred to as "lower layers" such as PUCCH/PUSCH or MAC Control Element ("CE"), while L3 and above (e.g., IP layer, transport layer (e.g., TCP, UDP, DCCP, SCTP), application layer (e.g., HTTP, SIP, SMTP, POP, etc.)) are referred to as "higher layers" or "upper layers. As an example, "upper layer signaling" may refer to signaling exchange at the RRC layer 235.

The physical layer 210 offers transport channels to the MAC layer 215. The MAC layer 215 offers logical channels to the RLC layer 220. The RLC layer 220 offers RLC channels to the PDCP layer 225. The PDCP layer 225 offers radio bearers to the SDAP layer 230 and/or RRC layer 235. The SDAP layer 230 offers QoS flows to the 5GC. The RRC layer 235 provides for the addition, modification, and release of Carrier Aggregation and/or Dual Connectivity. The RRC layer 235 also manages the establishment, configuration, maintenance, and release of Signaling Radio Bearers ("SRBs") and Data Radio Bearers ("DRBs"). In certain embodiments, a RRC entity functions for detection of and recovery from radio link failure.

The NAS layer 240 is between the UE 205 and the AMF 209 in the 5GC. NAS messages are passed transparently through the RAN. The NAS layer 240 is used to manage the establishment of communication sessions and for maintaining continuous communications with the UE 205 as it moves between different cells of the RAN. In contrast, the AS layer is between the UE 205 and the RAN carries information over the wireless portion of the network. While not depicted in Figure 2A, the IP layer exists above the NAS layer 240, a transport layer exists above the IP layer, and an application layer exists above the transport layer.

Figure 2B depicts a PC5 protocol stack 250, according to embodiments of the disclosure. While Figure 2B shows the transmitter ("Tx") UE 251 and the receiver ("Rx") UE 253, these are representative of a set of UEs communicating peer-to-peer via PC5 and other embodiments may involve different UEs. As depicted, the PC5 protocol stack includes a PHY layer 255, a MAC layer 260, a RLC layer 265, a PDCP layer 270, and RRC and SDAP layers (depicted as combined element "RRC/SDAP" 275), for the control plane and user plane, respectively.

The AS protocol stack for the control plane in the PC5 interface consists of at least RRC, PDCP, RLC and MAC layers, and the PHY layer. The AS protocol stack for the user plane in the PC5 interface consists of at least SDAP, PDCP, RLC and MAC layers, and the PHY layer. The L2 is split into the SDAP, PDCP, RLC and MAC layers. The L3 includes the RRC layer for the control plane and includes, e.g., an IP layer for the user plane. As with the NR protocol stack, in the Pc5 protocol stack L1 and L2 are referred to as "lower layers", while L3 and above (e.g., transport layer, V2X layer, application layer) are referred to as "higher layers" or "upper layers."

In some embodiments, there is a new RRC configuration that enables some Logical Channels ("LCHs") to operate in a mixed feedback mode (e.g., mode with a combination of blind retransmissions and feedback-based retransmissions) by using a new code point in the RRC LCH SL HARQ configuration or a no-feedback mode is used. The no-feedback mode transmissions (e.g., blind retransmissions) may be performed for a predetermined or variable number of transmissions.

In some embodiments, the transmitter may switch to and may stay in a certain mode with HARQ feedback. In one embodiment, the switch occurs after a number (x') of transmission, where x' may be preconfigured or may be determined using various methods, such as those described herein. The variability of the number of blind retransmissions may be based on changing channel conditions and so forth.

In various embodiments, LCHs that operate in the mixed feedback mode may be considered for resource allocation together with other logical channels with HARQ feedback enabled or disabled. In certain embodiments, LCHs that operate in the mixed feedback mode may be considered for resource allocation together only with other logical channels with same HARQ feedback mode (e.g., with logical channels in the mixed feedback mode).

In some embodiments, there may be no new RRC configuration allowing some LCHs to operate in mixed feedback mode (or equivalently no-feedback mode). In such embodiments, only the following two cases arise: 1) a TB containing only feedback enabled LCHs in which a certain number of BRs are made (e.g., x') and then one or more HARQ feedback-based (re)transmissions are made; and 2) a TB containing only feedback disabled LCHs: in one implementation, only BRs may be made - in another implementation, a certain number of blind retransmission may be made, then one or more HARQ feedback-based (re)transmissions are made.

In various embodiments, if a requested feedback option is HARQ feedback Option 2, then a Tx UE counts a number of NACKs and/or discontinuous transmission ("DTX") feedbacks (e.g., total_failures). If the number total_failures exceeds a threshold (e.g., threshold_total_failures), the Tx UE makes 'x' blind retransmissions.

In certain embodiments, a mixed HARQ mode of operation is implemented as HARQ enabled transmissions with UE autonomously triggered retransmission without having received HARQ feedback from the Rx UEs.

In some embodiments, if a MAC layer has determined as a result of logical channel prioritization ("LCP") that a TB contains only LCHs with HARQ feedback enabled, the MAC layer delivers the TB to a PHY layer and the PHY layer may further decide to transmit the TB in a "mixed mode" based on a current channel condition (e.g., priority of the TB, etc.). In one example, in mixed mode a first x HARQ transmissions of a TB do not request a HARQ feedback in sidelink control information ("SCI") and for an X+1 transmission, a UE may request in SCI for HARQ feedback from receiver UEs. For the first 'X' retransmission(s), the PHY layer may trigger some autonomous retransmissions from the MAC layer - without receiving a HARQ feedback on a physical sidelink feedback channel ("PSFCH") from any receiver or receiving ("RX") UE - by indicating "NACK" internally to the MAC layer for the determined number of BRs (e.g., x' transmissions).

In such embodiments, from the MAC layer point of view, the "mixed mode" operation is considered like standard HARQ enabled transmissions. Thus, the MAC layer is unaware of whether the HARQ feedback delivered from the PHY layer was triggering internally and/or autonomously or whether it was derived based on received HARQ feedback on PSFCH from receiving UEs.

In some embodiments, if a MAC layer has determined, as a result of LCP, that a TB contains only LCHs with HARQ feedback disabled, the MAC layer delivers the TB to the PHY layer and the PHY layer may further decide to transmit the TB in the "mixed mode" based on current channel conditions, a priority of the TB, and so forth. In one example, in mixed feedback mode, a first x HARQ transmissions of a TB do not request a HARQ feedback in SCI and for an X+1 transmission (and later retransmissions) request in SCI for HARQ feedback from the receiver UEs. For the first X+1 retransmission (and later retransmissions), the PHY layer may initiate HARQ feedback based retransmissions. A retransmission may be made when a "NACK" feedback or a DTX is received from one or more receivers, otherwise (e.g., all received HARQ feedbacks are acknowledgement ("ACK") feedback) no further retransmissions are made. From the MAC layer point of view, the "mixed mode" is considered to be a normal HARQ enabled transmission.

In various embodiments, a minimum time duration may be defined to denote a minimum time period between two HARQ transmissions of one transport block and may be considered by a Tx UE during SL resource selection.

In certain embodiments, SL Resources for all HARQ transmissions (or retransmissions) of a TB may be chosen by the Tx UE such that in the time domain that there is sufficient time for the Tx UE to receive a HARQ feedback for a HARQ transmission of a TB on the PSFCH from Rx UEs and to decide whether to perform further HARQ transmissions (or retransmissions) for the TB and to execute the HARQ retransmissions. As may be appreciated, a new minimum time duration parameter may be beneficial for scenarios in which a MAC layer of the Tx UE selects SL resources for x' number of blind HARQ transmissions of TB and the PHY layer of the Tx UE decides to ask for HARQ feedback from receiving UEs after the yth transmission, y being smaller than x, to determine whether further HARQ transmissions are necessary.

In some embodiments, a PHY layer of the Tx UE indicates to a MAC layer that for the SL resource selection there should be sufficient time between the transmissions of the TB to allow for gathering HARQ feedback. A minimum time distance between HARQ transmissions of a TB may be signaled to the MAC layer from the PHY layer as a new input parameter for the SL resource selection procedure. In one example, a minimum processing time may denote a minimum time between two HARQ transmission similar to a HARQ round trip time ("RTT") value or a K3 value for the Uu interface. In various embodiments, a new parameter minimum time distance between HARQ transmissions of a TB may be a fixed predefined value or may be defined according to the UE capability.

In certain embodiments, a PHY layer may only be allowed to use a mixed mode of operation if LCP results in a TB with LCHs configured for the mixed mode. In such embodiments, RRC may configure some LCH with the "mixed feedback mode."

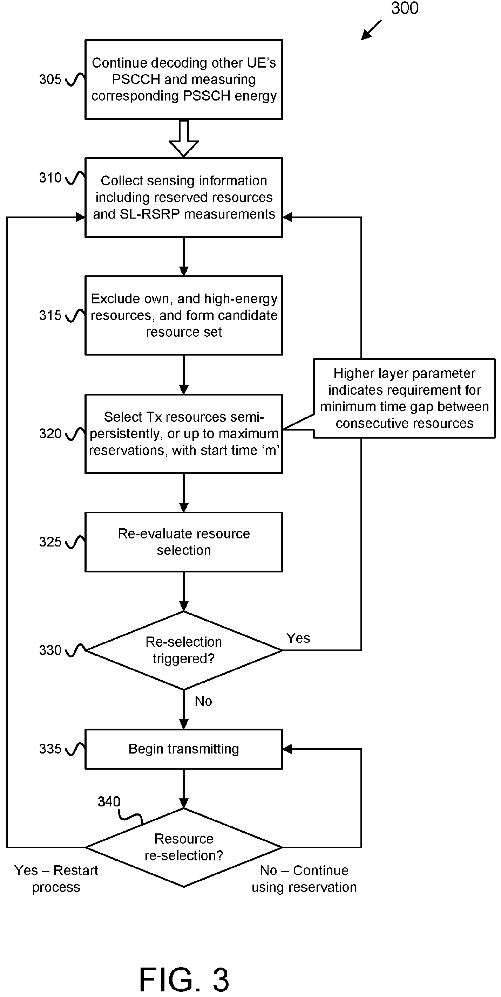

Figure 3 depicts a procedure 300 for sidelink sensing and resource (re-)selection, according to embodiments of the disclosure. The procedure 300 may be performed by a Tx UE, such as the UE 205 and/or the Tx UE 251. The procedure 300 begins at block 305 as the Tx UE decodes Physical Sidelink Control Channel ("PSCCH") transmissions from other UEs and measures corresponding Physical Sidelink Shared Channel ("PSSCH") energy. At block 310 the Tx UE collects sensing information including reserved resources and Sidelink Reference Signal Received Power ("SL-RSRP") measurements. The measurement of SL-RSRP allows the Tx UE to select appropriate resources and avoid interference to any existing communication.

At block 315 the Tx UE forms a candidate resource set by excluding its own and high-energy resources. The Tx UE excludes the resources where the measured Reference Signal Received Power ("RSRP") is higher than a threshold and considers them as occupied if the traffic priority in the measured resources is higher than its traffic priority. Note that a Tx UE may select occupied resources if it has higher priority traffic. In this way, higher priority traffic can occupy resources even if they have been already reserved by other UEs.

At block 320 the Tx UE selects transmission resources with start time "m". Note that the selected resources may be semi-persistent or, alternatively, up to a maximum number of reservations. In Resource Allocation Mode-2, the Tx UE performs continuous sensing and when a resource selection event is triggered (e.g., arrival of a transport block) in the Tx UE, the Tx UE considers its recent sensing results prior to the trigger time for resource selection.

As described in greater detail below, a higher-layer parameter may indicate the requirement for a minimum time gap (also referred to as minimum time duration) between consecutive resources, wherein the selection of transmission resources takes into account the minimum time gap. If HARQ feedback is enabled, the timing gap between 2 adjacent resource should be larger than the PSFCH period. That will cause additional latency. For some SL data with high reliability and lower latency requirement, it needs to support HARQ feedback to improve reliability. Furthermore, blind transmission can be applied to reduce latency and more retransmissions can also improve reliability.

At block 325 the Tx UE re-evaluates the resource selection, e.g., shortly before the start of a transmission on a selected resource. The re-evaluation may consider late SCI receptions, i.e., received after the sensing window, to be sure that the selected resource is still suitable for its transmission. At decision block 330, the Tx UE determines whether re-selection is triggered by the re-evaluation step. If yes, then the Tx UE returns to block 310 to collect sensing information, etc. If no, then the Tx UE begins transmitting at block 335.

At decision block 340, the Tx UE again determined whether resource re-selection is required. If yes, the Tx UE restarts the process by returning to block 310 to collect sensing information, etc. If no, then the Tx UE continues to use the resource reservation and again begins to transmit at block 335.

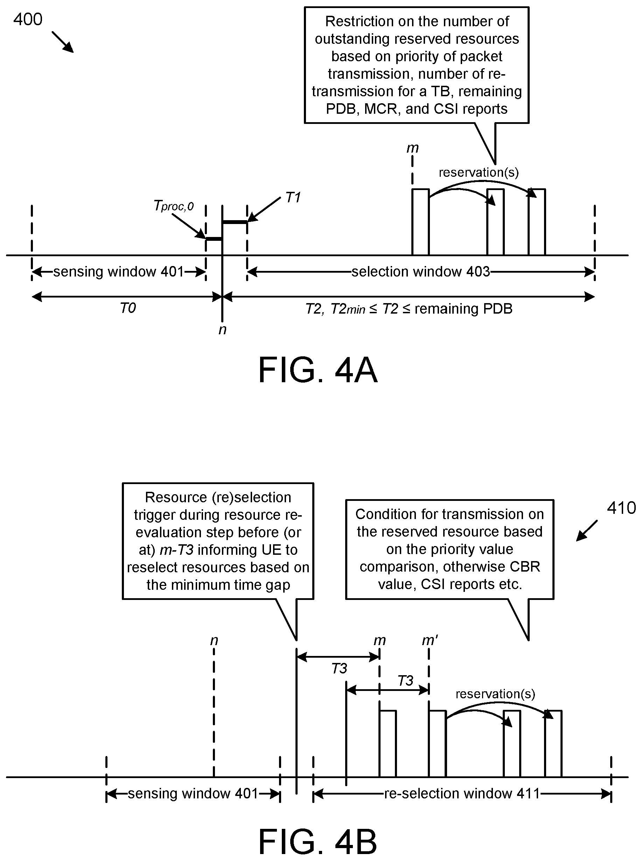

Figures 4A and 4B depicts timelines for sidelink sensing and resource (re-)selection procedure triggered at time $n$, according to embodiments of the disclosure. These timelines show behavior of the Tx UE 251.

Figure 4A depicts a first timeline 400 for sensing and resource (re-)selection procedure triggered at time $n$, without re-evaluation before ($m$-$T3$). Its first reserved resource is at time $m$. Figure 4A shows the sensing window 401 and the selection window 403, where $n$ is the trigger time for resource allocation. In one embodiment, the sensing window 401 comprises sensing results between 1100 ms and 100 ms prior to the trigger time $n$. As discussed above, the Tx UE 251, which performs sensing, measures the SL-RSRP of either PSCCH or PSSCH.

Between the end of the sensing window 401 and the trigger time $n$, there is a processing time Tproc,0 which corresponds to the required time in the lower layers (i.e., PHY layer 255 and MAC layer 260) for processing tasks and/or information exchange. Between the trigger time $n$ and the selection window 403, there is another processing time T1 which corresponds to the required time in the lower layers (i.e., PHY layer 255 and MAC layer 260) for processing tasks and/or information exchange.

The Tx UE 251 selects transmission resources for its (re-)transmission based on the sensing results and on a resource selection window. The selection window 403 starts shortly after the trigger of resource selection in the Tx UE (i.e., the arrival of a transport block) and the maximum window size is bounded to the remaining delay budget of the transport block.

After the exclusion of reserved resources from the selection window, the Tx UE 251 selects resources randomly from the best set of the remaining resources. In one embodiment, selects a threshold amount (e.g., 20%) of the best resources with a measured RSRP less than the threshold power and based on the traffic priority. Note that the threshold amount of resources may be based on the traffic priority. If the remaining resources after the exclusion procedure are less than the threshold amount of all resources in the selection window 403, then the Tx UE 251 may relax the RSRP threshold (e.g., by 3dB) until it has at least the threshold (20%, 35%, or 50% based on traffic priority) of all resources in the selection window for resource allocation.

In some embodiments, the final selection of resources is done in the MAC layer 260 of a Tx UE 251 receiving a set of unoccupied resources from the PHY layer 255. The selection of resources in the MAC layer 260 is based on a random procedure. The selected resources are not periodic.

In certain embodiments, the Tx UE 251 may reserve additional resources adding an indication in SCI. The reserved resources can be independent in time and frequency. As described in greater detail below, there may be a restriction on the number of outstanding reserved resources, e.g., based on the priority of packet transmission, the number of re-transmissions for a TB, a remaining Packet Delay Budget ("PDB"), a Minimum Communication Range ("MCR"), and/or Channel State Information ("CSI") reports.

Figure 4B depicts a second timeline 410 for sensing and resource (re-)selection procedure originally triggered at time $n$, which has a first reserved resource at time $m$ within the re-selection window 411, when re-evaluation occurring at $m$-$T3$ determines the resources are no longer selectable. The new re-evaluation cut-off becomes ($m'$-$T3$). After the selection of resources by the Tx UE 251 in Resource Allocation mode 2, there may be several reasons for resource re-selection. One of the reasons can be the reception of a reservation from another UE in the vicinity with a higher priority traffic than the traffic which the Tx UE 251 is intending to transmit.

In Resource Allocation mode 2, a higher layer (i.e., MAC layer 260) can request the lower layer (i.e., PHY layer 255) to determine a subset of resources from which the higher layer will select resources for PSSCH/PSCCH transmission. To trigger this procedure, in slot $n$, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of ms.

The following higher layer parameters affect this procedure:

- *t2min_SelectionWindow:* internal parameter $T_{2min}$ is set to the corresponding value from higher layer parameter *t2min_SelectionWindow* for the given value of $prio_{TX}$.
- *SL-ThresRSRP_pi_pj:* this higher layer parameter provides an RSRP threshold for each combination $(p_i, p_j)$, where $p_i$ is the value of the priority field in a received SCI format 0-1 and $p_j$ is the priority of the transmission of the Tx UE 251 selecting resources; for a given invocation of this procedure, $p_j = prio_{TX}$.
- *RSforSensing* selects if the Tx UE 251 uses the PSSCH-RSRP or PSCCH-RSRP measurement
- *reservationPeriodAllowed*
- *t0_SensingWindow:* internal parameter $T_0$ is defined as the number of slots corresponding to *t0_SensingWindow* ms.
- *k,* the minimum time gap between resource for HARQ feedback-based retransmission

The resource reservation interval, $P_{rsvp\_TX}$, if provided, is converted from units of *ms* to units of logical slots, resulting in $P'_{rsvp\_TX}$. Notation: $(t_0^{SL}, t_1^{SL}, t_2^{SL}, \dots)$ denotes the set of slots which can belong to a sidelink resource pool.

The following steps may be used for resource selection:

At Step 1) A candidate single-slot resource for transmission $R_{x,y}$ is defined as a set of $L_{subCH}$ contiguous sub-channels with sub-channel $x+j$ in slot $t_y^{SL}$ where $j = 0,\dots,$ $L_{subCH} - 1$. The Tx UE 251 is to assume that any set of $L_{subCH}$ contiguous sub-channels included in the corresponding resource pool within the time interval $[n + T_1, n + T_2]$ correspond to one candidate single-slot resource, where

- selection of $T_1$ is up to UE implementation under $0 \leq T_1 \leq T_{proc,1}$, where $T_{proc,1}$ is defined in 3GPP TS 38.214;
- if $T_{2min}$ is shorter than the remaining packet delay budget (in slots) then $T_2$ is up to UE implementation subject to $T_{2min} \leq T_2 \leq$ remaining packet budget (in slots); otherwise $T_2$ is set to the remaining packet delay budget (in slots).

The total number of candidate single-slot resources is denoted by $M_{total}$.

At Step 2) The sensing window is defined by the range of slots $[n - T_0, n - T_{proc,0})$ where $T_0$ and $T_{proc,1}$ are defined above. The Tx UE 251 is to monitor slots which can belong to a sidelink resource pool within the sensing window except for those in which its own transmissions occur. The Tx UE 251 is to perform the behavior in the following steps based on PSCCH decoded and RSRP measured in these slots.

At Step 3) The internal parameter $Th(p_i)$ is set to the corresponding value from higher layer parameter *SL-ThresRSRP_pi_pj* for $p_j$ equal to the given value of $prio_{TX}$ and each priority value $p_i$.

At Step 4) The set $S_A$ is initialized to the set of all the candidate single-slot resources.

At Step 5) The Tx UE 251 excludes any candidate single-slot resource $R_{x,y}$ from the set $S_A$ if it meets all the following conditions:

- the UE has not monitored slot $t_m^{SL}$ in Step 2.
- for any periodicity value allowed by the higher layer parameter *reservationPeriodAllowed* and a hypothetical SCI format 0-1 received in slot $t_m^{SL}$ with "Resource reservation period" field set to that periodicity value and indicating all subchannels of the resource pool in this slot, condition c in step 6 would be met.

At Step 6) The Tx UE 251 excludes any candidate single-slot resource $R_{x,y}$ from the set $S_A$ if it meets all the following conditions:

a. the UE receives an SCI format 0-1 in slot $t_m^{SL}$, and "Resource reservation period" field, if present, and "Priority" field in the received SCI format 0-1 indicate the values $P_{rsvp\_RX}$ and $prio_{RX}$, respectively;

b. the RSRP measurement performed, according to clause 8.4.2.1 for the received SCI format 0-1, is higher than $Th(prio_{RX})$;

c. the SCI format received in slot $t_m^{SL}$ or the same SCI format which, if and only if the "Resource reservation period" field is present in the received SCI format 0-1, is assumed to be received in slot(s) $t_{m+q \times P'_{rsvp\_RX}}^{SL}$ determines the set of resource blocks and slots which overlaps with $R_{x,y+j \times P'_{rsvp\_TX}}$ for q=1, 2, ..., Q and j=0, 1, ..., $C_{resel}$ - 1. Here, $P'_{rsvp\_RX}$ is $P_{rsvp\_RX}$ converted to units of logical slots, $Q = \left\lceil \dfrac{T_{scal}}{P_{rsvp\_RX}} \right\rceil$ if $P_{rsvp\_RX} <$

$T_{scal}$ and $n' - m \le P'_{rsvp\_RX}$ , where $t_{n'}^{SL} = n$ if slot n belongs to the set $\left(t_0^{SL}, t_1^{SL}, \ldots, t_{Tmax}^{SL}\right)$, otherwise slot $t_{n'}^{SL}$ is the first slot after slot n belonging to the set $\left(t_0^{SL}, t_1^{SL}, \ldots, t_{Tmax}^{SL}\right)$; otherwise Q = 1.

At Step 7) If the number of candidate single-slot resources remaining in the set $S_A$ is smaller than $0.2 \cdot M_{\text{total}}$, then $Th(p_i)$ is increased by 3 dB for each priority value $Th(p_i)$ and the procedure continues with step 4. The Tx UE 251 reports the set $S_A$ to higher layers.

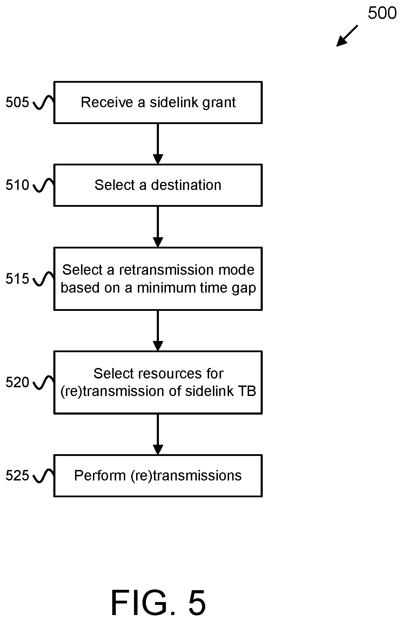

Figure 5 depicts a procedure 500 for mixed feedback based transmissions. The procedure 500 includes receiving 505 a sidelink grant and selecting 510 a destination. The procedure 500 also includes selecting 515 a retransmission mode (e.g., blind retransmission mode, HARQ feedback-based transmission mode, or a combination of blind retransmissions and HARQ feedback-based retransmissions) based on a minimum time gap between successive HARQ transmissions of a TB. The procedure 500 includes selecting 520 resources for a sidelink TB based on the minimum time gap. The procedure 500 then includes performing 525 re-transmissions.

According to embodiments of a first solution, the MAC layer 260 decides whether to switch a retransmission mode (i.e., from Blind Retransmission ("BR") to HARQ Feedback-Based Transmission ("HFBT"), or vice versa). In the first solution, LCH(s) configured for resource selection in Resource Allocation mode 2 may be (pre)configured by the RAN node 207 for SL HARQ feedback enable and disable using a separate RRC code point as explained above, where 'SL HARQ feedback disable' also means configuring blind retransmissions.

In one embodiment of the first solution, the MAC layer 260 decides about the Mixed mode switching decision between blind retransmission and HARQ feedback-based retransmission and vice versa and correspondingly informing about the timing restriction like minimum time gap between resources for corresponding HARQ retransmission(s) of a TB, resource pool with PSFCH resources is provided to the PHY layer 255 as part of Resource allocation Mode 2 initial resource (re) selection trigger. Based on these input parameters, the Tx UE 251 may perform candidate resource selection (i.e., at the PHY layer 255) and report the candidate resource set to the MAC layer 260.

In this embodiment, the MAC layer 260 selects corresponding resource pool with PSFCH resource based on the mixed mode configuration of the LCH(s).

In another implementation, of the first solution if the MAC layer 260 dynamically enables/disables SL HARQ feedback irrespective of the configuration of LCH(s) then the selection between a resource pool containing PSFCH resource and a resource pool not containing PSFCH resources may also change dynamically and hence the MAC layer 260 triggers resource (re)-selection procedure for this HARQ process ID to switch between resource pool without PSFCH resource to a resource pool with PSFCH resources.

An example implementation of the first solution the 3GPP specification TS 38.214 may look like the below:

- In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

  ◦ the resource pool from which the resources are to be reported;
  ◦ L1 priority, $prio_{TX}$;
  ◦ the remaining packet delay budget;
  ◦ the number of sub-channels to be used for the PSSCH/PSCCH transmission in a slot, $L_{\text{subCH}}$;
  ◦ optionally, the resource reservation interval, $P_{\text{rsvp\_TX}}$, in units of ms.

- The following higher layer parameters affect this procedure:

  ◦ t2min_SelectionWindow: internal parameter $T_{2min}$ is set to the corresponding value from higher layer parameter t2min_SelectionWindow for the given value of $prio_{TX}$.
  ◦ SL-ThresRSRP_pi_pj: this higher layer parameter provides an RSRP threshold for each combination $(p_i, p_j)$, where $p_i$ is the value of the priority field in a received SCI format 0-1 and $p_j$ is the priority of the transmission of the UE selecting resources; for a given invocation of this procedure, $p_j = prio_{TX}$.
  ◦ RSforSensing selects if the UE uses the PSSCH-RSRP or PSCCH-RSRP measurement, as defined in clause 8.4.2.1.
  ◦ reservationPeriodAllowed
  ◦ t0_SensingWindow: internal parameter $T_0$ is defined as the number of slots corresponding to t0_SensingWindow ms.
  ◦ k, minimum time gap between resource for HARQ feedback-based retransmission

In an alternate embodiment of the first solution, the PHY layer 255 makes the decision about switching retransmission modes. In some implementations, the PHY layer 255 may additionally inform the MAC layer 260 about candidate time slots where SL HARQ feedback is enabled (or, alternatively, where SL HARQ feedback is disabled) for each re-transmission attempt along with the report of candidate resource set and the MAC layer 260 may select the resource for each HARQ feedback based re-transmission according to the minimum time gap of HARQ RTT accordingly.

In one further embodiment of the first solution, the MAC layer 260 decides whether to switch within the transmission of a TB from HARQ feedback based re-transmission to blind retransmission or vice versa based on some predefined criteria, e.g., decision could be also left to UE implementation. According to one implementation of this embodiment, the PHY layer 255 provides the candidate resource set and the MAC layer 260 selects the SL resources according to SL HARQ enable/disable. While doing the resource selection the MAC layer 260 considers the minimum time gap between resources for corresponding HARQ retransmission(s) of a TB.

Here, the MAC layer 260 may further indicate to the PHY layer 255 when to signal in the SCI whether SL HARQ feedback is enabled for a re-transmission or not and about the SL HARQ feedback Option 1 or SL HARQ feedback Option 2. According to SL HARQ feedback Option 1, the Receiver UE (i.e., target UE) transmits HARQ-NACK on PSFCH if it fails to decode the corresponding TB after decoding the associated PSCCH and transmits no signal on PSFCH otherwise (i.e., the Rx UE does not transmit HARQ-ACK on PSFCH if it successfully decodes the corresponding TB). According to SL HARQ feedback Option 2, the Receiver UE ("Rx UE") transmits HARQ-ACK on PSFCH if it successfully decodes the corresponding TB. Additionally, the Rx UE transmits HARQ-NACK on PSFCH if it does not successfully decode the corresponding TB after decoding the associated PSCCH which targets the receiver UE. As used herein, "HARQ-ACK" may represent the Positive Acknowledge ("ACK"), while "HARQ-NACK" may represent the Negative Acknowledge ("NACK"). ACK means that a TB is correctly received while NACK (or NAK) means a TB is erroneously received, while Discontinuous Transmission ("DTX") means that no TB was detected.

Note that deciding in MAC layer 260 whether and when to switch from blind retransmission to HARQ feedback enabled retransmission allows for some simple implementation as the HARQ protocol is running the MAC layer 260, e.g., the MAC layer 260 expects a feedback from the PHY layer 255 when HARQ feedback is enabled. Further HARQ protocol aspects (decision whether to transmit new TB or further retransmission of a TB is also made in the MAC layer 260 based on PSFCH feedback for example).

In another implementation of the first solution, the MAC layer 260 informs the PHY layer 255 that a first number of re-transmissions (e.g., 1, 2, etc.) are blind and subsequent retransmissions (e.g., third and onwards) are HARQ feedback-based retransmissions. In various embodiments, the first number of Blind Retransmissions may be determined as follows: 1) a total number of transmissions may depend on one or more of a link budget requirement that may be determined and/or mapped from minimum communication range ("MCR"), SL pathloss (e.g., unicast), allowed MCS (e.g., code rate), transmit power of a Tx UE (e.g., a total number of transmissions may vary for MCR 'a' and MCR 'b', for a groupcast communication the worst pathloss is used if available); 2) a total number of BRs and HARQ feedback-based transmissions ("HFBTs") may depend on a total reliability to be achieved given a latency boundary (e.g., packet delay budget ("PDB")).

In one example, the Tx UE 251 determines a number of BRs to be performed for a given PDB then the UE decides about a HARQ feedback enabled retransmission. In another example, PDB or remaining PDB may be used to determine how many feedback based transmissions may be used in view of RTT between a transmission and reception of the corresponding HARQ feedback. If this would be less than that is required to fulfill a given reliability for a given MCR, then the Tx UE 251 may save time by making certain blind transmissions (or retransmissions). As may be appreciated, the terms transmission and retransmission may be used interchangeably herein. A transmission may be a first transmission or a retransmission, and a retransmission may refer to a first transmission.

In certain embodiments, the first number of Blind Retransmissions may be determined as a floor value of a HARQ operating point. The floor value may mean the biggest integer value that is smaller (or equal to) than the HARQ operating point. The HARQ operating point itself may be determined using statistical observation on a PC5 link for the same destination or for other destinations of the same or different cast-types.

In another implementation of the first solution, the MAC layer 260 provides a BITMAP of slots where blind retransmission and HARQ feedback based retransmissions are enabled.

In another implementation of the first solution, either the MAC layer 260 informs the PHY layer 255 in advance about the switching using above two implementations or the MAC layer 260 dynamically informs the PHY layer 255 for switching between blind retransmission and HARQ feedback based retransmission and vice versa.

According to a second solution, reliability and/or congestion parameters are considered for mixed mode switching decision between blind retransmission and HARQ feedback-based retransmission and vice versa. In one embodiment of the second solution, Minimum Communication Range ("MCR") is taken as input to determine the number of blind retransmissions and HARQ feedback based transmissions needed to satisfy reliability with the selected MCS. MCR is the distance (Range), e.g., in meters, from the Tx UE 251 where the QoS fulfilment actually applies. In some embodiments, the MCR is assigned by the V2X layers/ application layer and will be signaled alongside the Quality of Service ("QoS") (indicated using Quality indicators for the PC5 interface, i.e., "PQI") to the Access Stratum. The QoS applicable to a V2X message must be fulfilled in this Range. MCR is therefore important in seeking HARQ feedback from the Rx UEs.

In another embodiment of the second solution, the mixed mode switching decision is based on the MCR and/or on the availability of Channel Busy Ratio ("CBR") measurement. During congestion, the number of blind and HARQ feedback-based retransmission and vice versa may vary dynamically after the initial determination. As used herein, CBR is a measurement in a Tx UE to control the congestion when Resource Allocation Mode-2 is applied. In certain embodiments, the CBR may be calculated in each subframe as the portion of busy resources in a resource pool, e.g., in the most recent 100 ms. A resource is considered as busy if the received energy level in the resource is higher than a given threshold. CBR measurement results reflect the congestion in the medium.

In one example of dynamic numbers of BR and HFBT, a higher required reliability, priority and/ or MCR will mean that the Tx UE perform one or higher number of blind retransmissions, followed by HARQ feedback based retransmission(s). In another example, this determination is based on CBR e.g., for higher CBR, avoid unnecessary blind re-transmissions and therefore, perform the HARQ feedback based retransmission(s) for lower MCR values at least.

As noted above, in Resource Allocation Mode 2 there is a resource re-evaluation step after the initial candidate resource selection and before the actual transmission time slot. In some embodiments, of the second solution, the Tx UE 251 may monitor for any additional trigger coming from the MAC layer 260 that switches from blind retransmission to HARQ feedback-based retransmission or vice versa, i.e., mixed mode switching trigger. When the trigger for mixed mode switching (i.e., a switch from/ to HARQ feedback based retransmission(s) to/ from Blind retransmission(s)) comes before or at 'm-T3,' and then if any of the pre-selected or reserved resource does not satisfy the minimum time gap required for the switched target transmission (blind retransmission or HARQ feedback based retransmission),then resource re-selection is triggered to find new set of resources that satisfy the minimum HARQ RTT gap. In another method, the trigger from the MAC layer 260 to switch from blind retransmission to HARQ feedback based retransmission or vice versa contains a slot offset or from $n^{th}$ re-transmissions as a parameter to enable switching accordingly at the PHY layer 255.

In another implementation of the second solution, the MAC layer 260 may switch from blind retransmission to HARQ feedback based retransmission based on the timing restriction on the outstanding reserved resources satisfying the minimum HARQ RTT time gap. In another method, the MAC layer 260 may inform the PHY layer 255 to make further reservations on the future resources based on the minimum HARQ RTT time gap. In another method, switching from blind retransmission to HARQ feedback based retransmission may dynamically vary the number of reservation on future resource performed by the MAC layer 260 and eventually signaled in SCI.

In another embodiment of the second solution, the number of outstanding reserved resource by the MAC layer 260 may be based on one or more combination of the following: the QoS of the packet transmission, MCR value, total number of blind retransmission and/or HARQ feedback-based retransmission, CBR measurement, and/or CSI reports.

In another embodiment of the second solution, the switch from blind retransmission to HARQ feedback-based retransmission may be based on CSI reports received from the corresponding destination id or based on the CBR measurement. The gap in terms of slots between the CBR measurement received at the Tx UE 251 and resource (re)-selection or trigger for switching between blind retransmission to HARQ feedback-based retransmission is configurable at the Tx UE side based on the UE processing capability or priority of the packet transmission, or remaining PDB.

In another embodiment, the Tx UE 251 may use the reserved resources that did not fulfill the minimum HARQ RTT gap for the transmission of another TB, whose TB priority is equal or less than the priority of the reserved resource, less priority means higher PPPP/QCI value. If the priority value of the TB is higher compared to the priority of the reserved resource, then the Tx UE 251 does not transmit in the reserved resource.

In another implementation, the Tx UE 251 may transmit in the reserved resource irrespective of the priority of the TB based on one or more combination of the following when the CBR measurement is below certain configured threshold, MCR value, total number of retransmissions, CSI reports etc. as explained in examples above.

A third solution addresses SL/UL Prioritization in NR. For NR UL/SL prioritization between Sidelink SSB vs UL transmission, the Sidelink-SSB ("SL-SSB") priority is pre-configured and lower compared to UL-TX. For a Tx UE acting as a SL Sync reference UE ("SyncRef UE") by transmitting SL-SSB, when the SL-SSB is deprioritized compared to the UL transmission, then other neighboring UEs depending on SL-SSB from Tx UE may be affected (i.e., may lose synchronization).

In one embodiment, the RAN node 207 re-selects another SyncRef UE from the candidate SyncRef UE list when one of the configured SyncRef UE (i.e., the Tx UE) has a higher priority UL transmission compared to SL-SSB transmission, thus deprioritizing the SL-SSB transmission. In another embodiment, the reselection of the SyncRef UE happens only when consecutive SL-SSBs are deprioritized compared to an UL transmission. As used herein, deprioritization refers to allocating sufficient UE resources for transmission of the prioritized transmission.

In certain embodiments, the Tx UE is capable of simultaneous transmission on both the uplink channel and the sidelink channel. However, due to transmit power constraints the Tx UE must deprioritize either a sidelink transmission or an uplink transmission when the sidelink transmission overlaps with the uplink transmission in the time domain (i.e., by reducing a transmission power of the deprioritized transmission). In other embodiments, the Tx UE is not capable of simultaneous transmission on both the uplink channel and the sidelink channel. Here, the Tx UE must deprioritize either a sidelink transmission or an uplink transmission when the sidelink transmission overlaps with the uplink transmission in the time domain (i.e., by dropping the deprioritized transmission).

In some embodiments, the Tx UE informs the RAN node 207 about the actual SL-SSB transmission configuration in SL slots among the candidate SL slots reserved for SL-SSB transmission as part of UE assistance information or any RRC configuration message or MAC Control Element ("CE"), so that the RAN node 207 is able to reschedule UL by not overlapping with SL-SSB transmission.

In some embodiments, the Tx UE informs the RAN node 207 about its frequent deprioritization of a SL-SSB transmission compared to a UL transmission and hence Tx UE transmit reselection trigger of its own SyncRef UE status to RAN node 207 as part of UE assistance information or any RRC configuration message or MAC CE, the RAN node 207 after receiving the trigger from the Tx UE immediately performs reselection to another SyncRef UE from the candidate list.

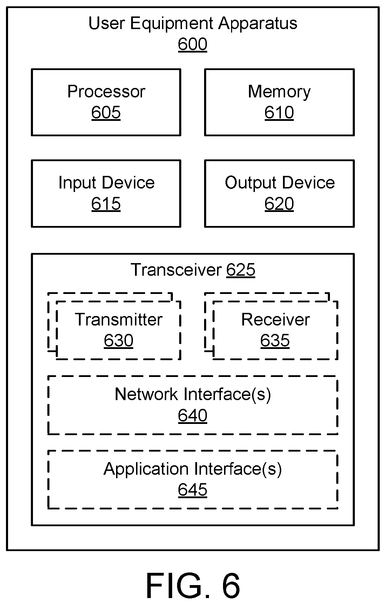

Figure 6 depicts a user equipment apparatus 600 that may be used for supporting a mixture of BR and HFBT, according to embodiments of the disclosure. In various embodiments, the user equipment apparatus 600 is used to implement one or more of the solutions described above. The user equipment apparatus 600 may be one embodiment of the remote unit 105 and/or the UE 205, described above. Furthermore, the user equipment apparatus 600 may include a processor 605, a memory 610, an input device 615, an output device 620, and a transceiver 625.

In some embodiments, the input device 615 and the output device 620 are combined into a single device, such as a touchscreen. In certain embodiments, the user equipment apparatus 600 may not include any input device 615 and/or output device 620. In various embodiments, the user equipment apparatus 600 may include one or more of: the processor 605, the memory 610, and the transceiver 625, and may not include the input device 615 and/or the output device 620.

As depicted, the transceiver 625 includes at least one transmitter 630 and at least one receiver 635. In some embodiments, the transceiver 625 communicates with one or more cells (or wireless coverage areas) supported by one or more base units 121. In various embodiments, the transceiver 625 is operable on unlicensed spectrum. Moreover, the transceiver 625 may include multiple UE panels supporting one or more beams. Additionally, the transceiver 625 may support at least one network interface 640 and/or application interface 645. The application interface(s) 645 may support one or more APIs. The network interface(s) 640 may support 3GPP reference points, such as Uu, N1, PC5, etc. Other network interfaces 640 may be supported, as understood by one of ordinary skill in the art.

The processor 605, in one embodiment, may include any known controller capable of executing computer-readable instructions and/or capable of performing logical operations. For example, the processor 605 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 605 executes instructions stored in the memory 610 to perform the methods and routines described herein. The processor 605 is communicatively coupled to the memory 610, the input device 615, the output device 620, and the transceiver 625. In certain embodiments, the processor 605 may include an application processor (also known as "main processor") which manages application-domain and operating system ("OS") functions and a baseband processor (also known as "baseband radio processor") which manages radio functions.

In various embodiments, the processor 605 controls the user equipment apparatus 600 to implement the above described UE behaviors. For example, the processor 605 provides a PHY layer 255 and a MAC layer 260 and determines a minimum time duration between a first resource for HARQ transmission of the TB and a second resource for HARQ transmission of the TB. Here, the minimum time duration comprises a sum of: a first time to receive HARQ feedback, a second time to determine whether to perform retransmissions of the TB, and a third time to retransmit the TB.

The processor 605 selects a retransmission mode (i.e., determining whether to switch the retransmission mode) based on the minimum time duration. Here, the retransmission mode comprises one of: a blind retransmission mode and a HFBT mode. The processor 605 selects sidelink resources for retransmission of the TB based on the selected retransmission mode.

In some embodiments, the PHY layer 255 determines the minimum time duration, provides a candidate resource set, and informs the MAC layer 260 about candidate time slots where sidelink HARQ feedback is enabled for each re-transmission attempt. In such embodiments, the MAC layer 260 selects the sidelink resources based on the minimum time gap. In some embodiments, the MAC layer 260 selects the retransmission mode and selects the sidelink resources from a candidate resource set provided by the PHY layer 255. In such embodiments, the MAC layer 260 selects the sidelink resources based on the minimum time gap.

In some embodiments, the MAC layer 260 selects the first resource for HARQ transmission of the TB and the second resource for HARQ transmission of the TB based on the minimum time duration. In some embodiments, the MAC layer 260 dynamically enables HARQ feedback for the TB and triggering resource selection in response to enabling HARQ feedback. In such embodiments, the resource selection that was triggered in response to enabling HARQ feedback comprises switching to a resource pool containing PSFCH resource.

In some embodiments, selecting the retransmission mode is based on a pattern of blind retransmissions and HARQ feedback-based transmissions. In certain embodiments, a first number of retransmissions are blind retransmissions and subsequent retransmissions are HARQ feedback-based transmissions. In some embodiments, the MAC layer 260 sends a bitmap of slots to the PHY layer 255, said bitmap indicating where blind retransmissions are enabled and where HARQ feedback-based transmissions are enabled.

In some embodiments, the processor 605 further determines a number of blind retransmissions and HARQ feedback-based transmissions needed to satisfy a reliability requirement and decreases the number of blind retransmissions in response to increased channel congestion. In some embodiments, selecting the retransmission mode comprises switching from the blind retransmission mode to the HFBT mode based on CSI (e.g., CSI reports received from the corresponding Destination ID) and/or on a CBR of the sidelink channel.

The memory 610, in one embodiment, is a computer readable storage medium. In some embodiments, the memory 610 includes volatile computer storage media. For example, the memory 610 may include a RAM, including dynamic RAM ("DRAM"), synchronous dynamic RAM ("SDRAM"), and/or static RAM ("SRAM"). In some embodiments, the memory 610 includes non-volatile computer storage media. For example, the memory 610 may include a hard disk drive, a flash memory, or any other suitable non-volatile computer storage device. In some embodiments, the memory 610 includes both volatile and non-volatile computer storage media.

In some embodiments, the memory 610 stores data related to supporting a mixture of BR and HFBT. For example, the memory 610 may store various parameters, panel/beam configurations, resource assignments, policies, and the like as described above. In certain embodiments, the memory 610 also stores program code and related data, such as an operating system or other controller algorithms operating on the user equipment apparatus 600.

The input device 615, in one embodiment, may include any known computer input device including a touch panel, a button, a keyboard, a stylus, a microphone, or the like. In some embodiments, the input device 615 may be integrated with the output device 620, for example, as a touchscreen or similar touch-sensitive display. In some embodiments, the input device 615 includes a touchscreen such that text may be input using a virtual keyboard displayed on the touchscreen and/or by handwriting on the touchscreen. In some embodiments, the input device 615 includes two or more different devices, such as a keyboard and a touch panel.

The output device 620, in one embodiment, is designed to output visual, audible, and/or haptic signals. In some embodiments, the output device 620 includes an electronically controllable display or display device capable of outputting visual data to a user. For example, the output device 620 may include, but is not limited to, an LCD display, an LED display, an OLED display, a projector, or similar display device capable of outputting images, text, or the like to a user. As another, non-limiting, example, the output device 620 may include a wearable display separate from, but communicatively coupled to, the rest of the user equipment apparatus 600, such as a smart watch, smart glasses, a heads-up display, or the like. Further, the output device 620 may be a component of a smart phone, a personal digital assistant, a television, a table computer, a notebook (laptop) computer, a personal computer, a vehicle dashboard, or the like.

In certain embodiments, the output device 620 includes one or more speakers for producing sound. For example, the output device 620 may produce an audible alert or notification (e.g., a beep or chime). In some embodiments, the output device 620 includes one or more haptic devices for producing vibrations, motion, or other haptic feedback. In some embodiments, all or portions of the output device 620 may be integrated with the input device 615. For example, the input device 615 and output device 620 may form a touchscreen or similar touch-sensitive display. In other embodiments, the output device 620 may be located near the input device 615.

The transceiver 625 communicates with one or more network functions of a mobile communication network via one or more access networks. The transceiver 625 operates under the control of the processor 605 to transmit messages, data, and other signals and also to receive messages, data, and other signals. For example, the processor 605 may selectively activate the transceiver 625 (or portions thereof) at particular times in order to send and receive messages.

The transceiver 625 includes at least transmitter 630 and at least one receiver 635. One or more transmitters 630 may be used to provide UL communication signals to a base unit 121, such as the UL transmissions described herein. Similarly, one or more receivers 635 may be used to receive DL communication signals from the base unit 121, as described herein. Although only one transmitter 630 and one receiver 635 are illustrated, the user equipment apparatus 600 may have any suitable number of transmitters 630 and receivers 635. Further, the transmitter(s) 630 and the receiver(s) 635 may be any suitable type of transmitters and receivers. In one embodiment, the transceiver 625 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 625, transmitters 630, and receivers 635 may be implemented as physically separate components that access a shared hardware resource and/or software resource, such as for example, the network interface 640.

In various embodiments, the transceiver 725 is operable on an uplink channel and on a sidelink channel. In certain embodiments, the transceiver 725 is capable of simultaneous transmission on both the uplink channel and the sidelink channel. However, due to transmit power constraints the processor 705 must deprioritize either a sidelink transmission or an uplink transmission when the sidelink transmission overlaps with the uplink transmission in the time domain (i.e., by reducing a transmission power of the deprioritized transmission). In other embodiments, the transceiver 725 is not capable of simultaneous transmission on both the uplink channel and the sidelink channel. Here, the processor must deprioritize either a sidelink transmission or an uplink transmission when the sidelink transmission overlaps with the uplink transmission in the time domain (i.e., by dropping the deprioritized transmission).

Examples of the sidelink ("SL") transmission include, but are not limited to, Sidelink Synchronization Signal Block ("SL-SSB"), control channel transmission such as PSFCH, SL CSI report in SL MAC CE, SL MAC CE, etc., combined SL feedback and SL data transmission, and SL data/PSSCH transmission. Examples of the uplink ("UL") transmission include, but are not limited to, Random Access Channel ("RACH") transmission, Sounding Reference Signal ("SRS") transmission, Scheduling Request ("SR") transmission, Physical Uplink Control Channel ("PUCCH") transmission (e.g., PUCCH UL HARQ feedback (i.e., ACK/NACK), PUCCH SL HARQ feedback (i.e., ACK/NACK), PUCCH CSI, aperiodic PUCCH, etc.), and PUSCH transmission (e.g., UL data, MAC CE, PUSCH UL HARQ feedback (i.e., ACK/NACK), PUSCH CSI, PUSCH SL HARQ feedback (i.e., ACK/NACK)).

In various embodiments, one or more transmitters 630 and/or one or more receivers 635 may be implemented and/or integrated into a single hardware component, such as a multi-transceiver chip, a system-on-a-chip, an Application Specific Integrated Circuit ("ASIC"), or other type of hardware component. In certain embodiments, one or more transmitters 630 and/or one or more receivers 635 may be implemented and/or integrated into a multi-chip module. In some embodiments, other components such as the network interface 640 or other hardware components/circuits may be integrated with any number of transmitters 630 and/or receivers 635 into a single chip. In such embodiment, the transmitters 630 and receivers 635 may be logically configured as a transceiver 625 that uses one more common control signals or as modular transmitters 630 and receivers 635 implemented in the same hardware chip or in a multi-chip module.

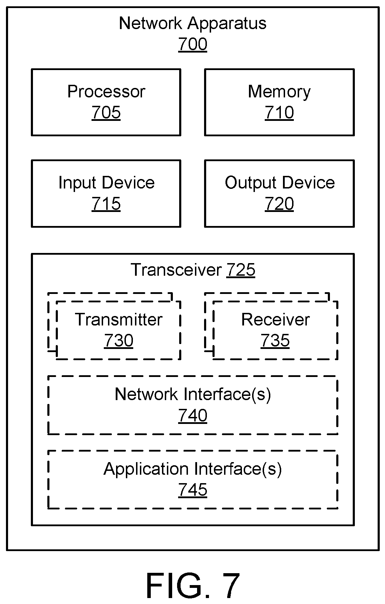

Figure 7 depicts a network apparatus 700 that may be used for supporting a mixture of BR and HFBT, according to embodiments of the disclosure. In one embodiment, network apparatus 700 may be one implementation of a RAN node, such as the base unit 121, the RAN node 207, or a gNB, as described above. Furthermore, the network apparatus 700 may include a processor 705, a memory 710, an input device 715, an output device 720, and a transceiver 725.

In some embodiments, the input device 715 and the output device 720 are combined into a single device, such as a touchscreen. In certain embodiments, the network apparatus 700 may not include any input device 715 and/or output device 720. In various embodiments, the network apparatus 700 may include one or more of: the processor 705, the memory 710, and the transceiver 725, and may not include the input device 715 and/or the output device 720.

As depicted, the transceiver 725 includes at least one transmitter 730 and at least one receiver 735. Here, the transceiver 725 communicates with one or more remote units 105. Additionally, the transceiver 725 may support at least one network interface 740 and/or application interface 745. The application interface(s) 745 may support one or more APIs. The network interface(s) 740 may support 3GPP reference points, such as Uu, N1, N2 and N3. Other network interfaces 740 may be supported, as understood by one of ordinary skill in the art.

The processor 705, in one embodiment, may include any known controller capable of executing computer-readable instructions and/or capable of performing logical operations. For example, the processor 705 may be a microcontroller, a microprocessor, a CPU, a GPU, an auxiliary processing unit, a FPGA, or similar programmable controller. In some embodiments, the processor 705 executes instructions stored in the memory 710 to perform the methods and routines described herein. The processor 705 is communicatively coupled to the memory 710, the input device 715, the output device 720, and the transceiver 725.

In various embodiments, the network apparatus 700 is a RAN node (e.g., gNB) that communicates with one or more UEs, as described herein. In such embodiments, the processor 705 controls the network apparatus 700 to perform the above described RAN behaviors. When operating as a RAN node, the processor 705 may include an application processor (also known as "main processor") which manages application-domain and operating system ("OS") functions and a baseband processor (also known as "baseband radio processor") which manages radio functions.

The memory 710, in one embodiment, is a computer readable storage medium. In some embodiments, the memory 710 includes volatile computer storage media. For example, the memory 710 may include a RAM, including dynamic RAM ("DRAM"), synchronous dynamic RAM ("SDRAM"), and/or static RAM ("SRAM"). In some embodiments, the memory 710 includes non-volatile computer storage media. For example, the memory 710 may include a hard disk drive, a flash memory, or any other suitable non-volatile computer storage device. In some embodiments, the memory 710 includes both volatile and non-volatile computer storage media.

In some embodiments, the memory 710 stores data related to supporting a mixture of BR and HFBT. For example, the memory 710 may store parameters, configurations, resource assignments, policies, and the like, as described above. In certain embodiments, the memory 710 also stores program code and related data, such as an operating system or other controller algorithms operating on the network apparatus 700.

The input device 715, in one embodiment, may include any known computer input device including a touch panel, a button, a keyboard, a stylus, a microphone, or the like. In some embodiments, the input device 715 may be integrated with the output device 720, for example, as a touchscreen or similar touch-sensitive display. In some embodiments, the input device 715 includes a touchscreen such that text may be input using a virtual keyboard displayed on the touchscreen and/or by handwriting on the touchscreen. In some embodiments, the input device 715 includes two or more different devices, such as a keyboard and a touch panel.

The output device 720, in one embodiment, is designed to output visual, audible, and/or haptic signals. In some embodiments, the output device 720 includes an electronically controllable display or display device capable of outputting visual data to a user. For example, the output device 720 may include, but is not limited to, an LCD display, an LED display, an OLED display, a projector, or similar display device capable of outputting images, text, or the like to a user. As another, non-limiting, example, the output device 720 may include a wearable display separate from, but communicatively coupled to, the rest of the network apparatus 700, such as a smart watch, smart glasses, a heads-up display, or the like. Further, the output device 720 may be a component of a smart phone, a personal digital assistant, a television, a table computer, a notebook (laptop) computer, a personal computer, a vehicle dashboard, or the like.

In certain embodiments, the output device 720 includes one or more speakers for producing sound. For example, the output device 720 may produce an audible alert or notification (e.g., a beep or chime). In some embodiments, the output device 720 includes one or more haptic devices for producing vibrations, motion, or other haptic feedback. In some embodiments, all or portions of the output device 720 may be integrated with the input device 715. For example, the input device 715 and output device 720 may form a touchscreen or similar touch-sensitive display. In other embodiments, the output device 720 may be located near the input device 715.

The transceiver 725 includes at least transmitter 730 and at least one receiver 735. One or more transmitters 730 may be used to communicate with the UE, as described herein. Similarly, one or more receivers 735 may be used to communicate with network functions in the PLMN and/or RAN, as described herein. Although only one transmitter 730 and one receiver 735 are illustrated, the network apparatus 700 may have any suitable number of transmitters 730 and receivers 735. Further, the transmitter(s) 730 and the receiver(s) 735 may be any suitable type of transmitters and receivers.

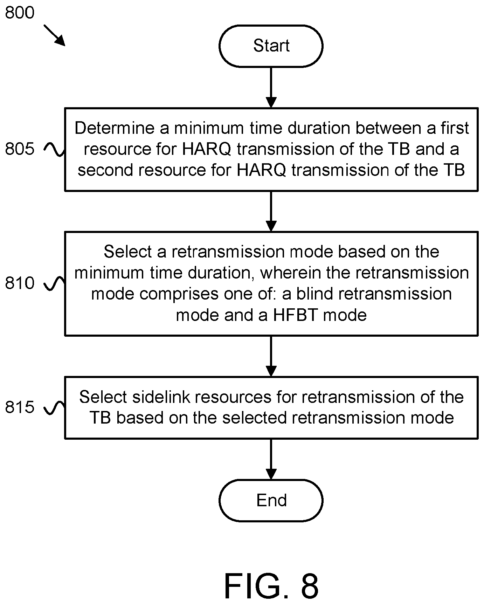

Figure 8 depicts one embodiment of a method 800 for supporting a mixture of BR and HFBT, according to embodiments of the disclosure. In various embodiments, the method 800 is performed by a user equipment device in a mobile communication network, such as the remote unit 105, the UE 205, and/or the user equipment apparatus 600, described above. In some embodiments, the method 800 is performed by a processor, such as a microcontroller, a microprocessor, a CPU, a GPU, an auxiliary processing unit, a FPGA, or the like.

The method 800 begins and determining a minimum time duration between a first resource for HARQ transmission of the TB and a second resource for HARQ transmission of the TB. Here, the minimum time duration comprises a sum of: a first time to receive HARQ feedback, a second time to determine whether to perform retransmissions of the TB, and a third time to retransmit the TB. The first method includes selecting a retransmission mode (i.e., determining whether to switch the retransmission mode) based on the minimum time duration, wherein the retransmission mode comprises one of: a blind retransmission mode and a HFBT mode and selecting sidelink resources for retransmission of the TB based on the selected retransmission mode. The method 800 ends.

Disclosed herein is a first apparatus for supporting a mixture of BR and HFBT, according to embodiments of the disclosure. The first apparatus may be implemented by a user equipment device in a mobile communication network, such as the remote unit 105, the UE 205, and/or the user equipment apparatus 600, described above. The first apparatus includes a processor that provides a physical ("PHY") layer and a Medium Access Control ("MAC") layer and a transceiver that communicates on a sidelink channel. The processor determines a minimum time duration between a first resource for hybrid automatic repeat request ("HARQ") transmission of the transport block ("TB") and a second resource for HARQ transmission of the TB. Here, the minimum time duration comprises a sum of: a first time to receive HARQ feedback, a second time to determine whether to perform retransmissions of the TB, and a third time to retransmit the TB. The processor selects a retransmission mode (i.e., determining whether to switch the retransmission mode) based on the minimum time duration, wherein the retransmission mode comprises one of: a blind retransmission mode and a HARQ feedback-based transmission ("HFBT") mode; and selects sidelink resources for retransmission of the TB based on the selected retransmission mode.

In some embodiments, the PHY layer determines the minimum time duration, provides a candidate resource set, and informs the MAC layer about candidate time slots where sidelink HARQ feedback is enabled for each re-transmission attempt. In such embodiments, the MAC layer selects the sidelink resources based on the minimum time gap. In some embodiments, the MAC layer selects the retransmission mode and selects the sidelink resources from a candidate resource set provided by the PHY layer. In such embodiments, the MAC layer selects the sidelink resources based on the minimum time gap.

In some embodiments, the MAC layer selects the first resource for HARQ transmission of the TB and the second resource for HARQ transmission of the TB based on the minimum time duration. In some embodiments, the MAC layer dynamically enables HARQ feedback for the TB and triggering resource selection in response to enabling HARQ feedback. In such embodiments, the resource selection that was triggered in response to enabling HARQ feedback comprises switching to a resource pool containing Physical Sidelink Feedback Channel ("PSFCH") resource.

In some embodiments, selecting the retransmission mode is based on a pattern of blind retransmissions and HARQ feedback-based transmissions. In certain embodiments, a first number of retransmissions are blind retransmissions and subsequent retransmissions are HARQ feedback-based transmissions. In some embodiments, the MAC layer sends a bitmap of slots to the PHY layer, said bitmap indicating where blind retransmissions are enabled and where HARQ feedback-based transmissions are enabled.

In some embodiments, the processor further determines a number of blind retransmissions and HARQ feedback-based transmissions needed to satisfy a reliability requirement and decreases the number of blind retransmissions in response to increased channel congestion. In some embodiments, selecting the retransmission mode comprises switching from the blind retransmission mode to the HFBT mode based on Channel State Information ("CSI") (e.g., reports received from the corresponding Destination ID) and/or on a Channel Busy Ratio ("CBR") of the sidelink channel.

Disclosed herein is a first method for supporting a mixture of BR and HFBT, according to embodiments of the disclosure. The first method may be performed by a user equipment device in a mobile communication network, such as the remote unit 105, the UE 205, and/or the user equipment apparatus 600, described above. The first method includes determining a minimum time duration between a first resource for HARQ transmission of the TB and a second resource for HARQ transmission of the TB. Here, the minimum time duration comprises a sum of: a first time to receive HARQ feedback, a second time to determine whether to perform retransmissions of the TB, and a third time to retransmit the TB. The first method includes selecting a retransmission mode (i.e., determining whether to switch the retransmission mode) based on the minimum time duration, wherein the retransmission mode comprises one of: a blind retransmission mode and a HFBT mode and selecting sidelink resources for retransmission of the TB based on the selected retransmission mode.

In some embodiments, the PHY layer determines the minimum time duration, the method further comprising the PHY layer providing a candidate resource set and informing the MAC layer about candidate time slots where sidelink HARQ feedback is enabled for each re-transmission attempt. In such embodiments, the MAC layer selects the sidelink resources based on the minimum time gap. In some embodiments, the MAC layer selects the retransmission mode and wherein the MAC layer selects the sidelink resources from a candidate resource set provided by the PHY layer. In such embodiments, the MAC layer selects the sidelink resources based on the minimum time gap.

In some embodiments, the first method includes selecting the first resource for HARQ transmission of the TB and the second resource for HARQ transmission of the TB based on the minimum time duration. In certain embodiments, the MAC layer selects the first resource and the second resource. In some embodiments, the first method includes dynamically enabling HARQ feedback for the TB and triggering resource selection in response to enabling HARQ feedback. In certain embodiments, the resource selection in response to enabling HARQ feedback comprise of selection of resource pool containing PSFCH resource.

In some embodiments, selecting the retransmission mode is based on a pattern of blind retransmissions and HARQ feedback-based transmissions. In certain embodiments, a first number of retransmissions are blind retransmissions and subsequent retransmissions are HARQ feedback-based transmissions. In some embodiments, the first method includes sending a bitmap of slots from the MAC layer to the PHY layer, said bitmap indicating where blind retransmissions are enabled and where HARQ feedback-based transmissions are enabled.

In some embodiments, the first method includes determining a number of blind retransmissions and HARQ feedback-based transmissions needed to satisfy a reliability requirement and decreasing the number of blind retransmissions in response to increased channel congestion. In some embodiments, selecting the retransmission mode comprises switching from the blind retransmission mode to the HFBT mode based on CSI (e.g., CSI reports received from the corresponding Destination ID) and/or on a CBR of the sidelink channel.

Embodiments may be practiced in other specific forms. The described embodiments are to be considered in all respects only as illustrative and not restrictive. The scope of the invention is, therefore, indicated by the appended claims rather than by the foregoing description.

**Claims**

1. A User Equipment, UE, (600) for wireless communication, comprising:

   at least one memory (610); and
   at least one processor (605) coupled with the at least one memory and configured to cause the UE to:

   determine a minimum time gap between a first resource for a first hybrid automatic repeat request, HARQ, transmission of a transport block, TB, and a second resource for a second HARQ transmission of the TB, wherein the minimum time gap comprises a sum of:

   a first time to receive HARQ feedback;
   a second time to determine whether to perform retransmission of the TB; and
   a third time to perform the retransmission of the TB; and

   select, from a candidate resource set, a set of sidelink, SL, resources for the retransmission of the TB based at least in part on the minimum time gap.

2. The UE (600) of claim 1, wherein the at least one processor is further configured to cause the UE to provide a physical, PHY, layer and a Medium Access Control, MAC, layer, wherein the at least one processor is further configured to cause the PHY layer to indicate the candidate resource set to the MAC layer, and wherein to select the set of SL resources, the at least one processor is further configured to cause the MAC layer to select the SL resources based at least in part on the minimum time gap.

3. The UE (600) of claim 2, wherein to determine the minimum time gap, the at least one processor is configured to cause the PHY layer to determine the minimum time gap, and wherein the at least one processor is configured to cause the PHY layer to indicate, to the MAC layer, one or more candidate time slots in which SL HARQ feedback is enabled for a retransmission attempt.

4. The UE (600) of claim 1, wherein the at least one processor is configured to cause the UE to select the first resource for the first HARQ transmission of the TB and the second resource for the second HARQ transmission of the TB based on the minimum time gap.

5. The UE (600) of claim 4, wherein the at least one processor is configured to cause the UE to provide a Medium Access Control, MAC, layer configured to select the first resource and the second resource.

6. The UE (600) of claim 1, wherein the at least one processor is configured to cause the UE to enable HARQ feedback for the TB and to perform resource selection in response to enabling the HARQ feedback.

7. The UE (600) of claim 6, wherein to perform the resource selection, the at least one processor is configured to cause the UE to switch to a resource pool containing a Physical Sidelink Feedback Channel, PSFCH, resource.

8. The UE (600) of claim 1, wherein the at least one processor is configured to cause the UE to send a bitmap of slots from a medium access control, MAC, layer to a physical, PHY, layer, and wherein the bitmap of slots identifies enabled blind retransmissions and enabled HARQ feedback-based transmissions.

9. The UE (600) of claim 1, wherein the at least one processor is configured to cause the UE to:

   determine a number of blind retransmissions and a number of HARQ feedback-based transmissions to satisfy a reliability requirement; and
   decrease the number of blind retransmissions in response to a change in a channel congestion.

10. A processor (605) for wireless communication, comprising:

    at least one controller coupled with at least one memory and configured to cause the processor to:
    determine a minimum time gap between a first resource for a first hybrid automatic repeat request, HARQ, transmission of a transport block, TB, and a second resource for a second HARQ transmission of the TB, wherein the minimum time gap comprises a sum of:

    a first time to receive HARQ feedback;
    a second time to determine whether to perform retransmission of the TB; and
    a third time to perform the retransmission of the TB; and

select, from a candidate resource set, a set of sidelink, SL, resources for the retransmission of the TB based at least in part on the minimum time gap.

11. The processor (605) of claim 10, wherein the at least one controller is further configured to cause a physical, PHY, layer to indicate the candidate resource set to a medium access control, MAC, layer, and wherein to select the set of SL resources, the at least one controller is further configured to cause the MAC layer to select the SL resources based at least in part on the minimum time gap.

12. A method performed at a user equipment, UE (600), the method comprising:

determining a minimum time gap between a first resource for a first hybrid automatic repeat request, HARQ, transmission of a transport block, TB, and a second resource for a second HARQ transmission of the TB; and
selecting, from a candidate resource set, a set of sidelink, SL, resources for a retransmission of the TB based at least in part on the minimum time gap,
wherein the minimum time gap comprises a sum of:

a first time to receive HARQ feedback;
a second time to determine whether to perform the retransmission of the TB; and
a third time to perform the retransmission of the TB.

**Patentansprüche**

1. Benutzergerät, UE, (600) zur drahtlosen Kommunikation, umfassend:

mindestens einen Speicher (610); und
mindestens einen Prozessor (605), der mit dem mindestens einen Speicher gekoppelt ist und so konfiguriert ist, dass er das UE zu Folgendem veranlasst:

Bestimmen einer minimalen Zeitlücke zwischen einer ersten Ressource für eine erste Übertragung einer hybriden automatischen Wiederholungsanforderung, Hybrid Automatic Repeat Request - HARQ, eines Transportblocks, TB, und einer zweiten Ressource für eine zweite HARQ-Übertragung des TB, wobei die minimale Zeitlücke eine Summe aus folgenden Elementen umfasst:
einer ersten Zeit zum Empfangen von HARQ-Feedback;
einer zweiten Zeit zum Bestimmen, ob eine erneute Übertragung des TB durchgeführt werden soll; und
einer dritten Zeit zum Durchführen der erneuten Übertragung des TB; und
Auswählen eines Satzes von Sidelink-Ressourcen, SL, für die erneute Übertragung des TB aus einem Satz von Kandidatenressourcen, mindestens teilweise basierend auf der minimalen Zeitlücke.

2. UE (600) nach Anspruch 1, wobei der mindestens eine Prozessor ferner so konfiguriert ist, dass er das UE veranlasst, eine physikalische Schicht, PHY, und eine Medium Access Control-Schicht, MAC, bereitzustellen, wobei der mindestens eine Prozessor ferner so konfiguriert ist, dass er die PHY-Schicht veranlasst, den Kandidatenressourcensatz der MAC-Schicht anzuzeigen, und wobei der mindestens eine Prozessor zum Auswählen des Satzes von SL-Ressourcen ferner so konfiguriert ist, dass er die MAC-Schicht veranlasst, die SL-Ressourcen mindestens teilweise basierend auf der minimalen Zeitlücke auszuwählen.

3. UE (600) nach Anspruch 2, wobei zum Bestimmen der minimalen Zeitlücke der mindestens eine Prozessor so konfiguriert ist, dass er die PHY-Schicht veranlasst, die minimale Zeitlücke zu bestimmen, und wobei der mindestens eine Prozessor so konfiguriert ist, dass er die PHY-Schicht veranlasst, der MAC-Schicht einen oder mehrere Kandidaten-Zeit-Slots anzuzeigen, in denen SL-HARQ-Feedback für einen Versuch der erneuten Übertragung aktiviert ist.

4. UE (600) nach Anspruch 1, wobei der mindestens eine Prozessor so konfiguriert ist, dass er das UE veranlasst, die erste Ressource für die erste HARQ-Übertragung des TB und die zweite Ressource für die zweite HARQ-Übertragung des TB auf der Grundlage der minimalen Zeitlücke auszuwählen.

5. UE (600) nach Anspruch 4, wobei der mindestens eine Prozessor so konfiguriert ist, dass er das UE veranlasst, eine Medium Access Control-Schicht, MAC, bereitzustellen, die so konfiguriert ist, dass sie die erste Ressource und die zweite Ressource auswählt.

6. UE (600) nach Anspruch 1, wobei der mindestens eine Prozessor so konfiguriert ist, dass er das UE veranlasst, HARQ-Feedback für den TB zu aktivieren und als Reaktion auf die Aktivierung des HARQ-Feedbacks eine Ressourcenauswahl durchzuführen.

7. UE (600) nach Anspruch 6, wobei der mindestens eine Prozessor zum Durchführen der Ressourcenauswahl so konfiguriert ist, dass er das UE veranlasst, zu einem Ressourcenpool zu wechseln, der eine PSFCH-Ressource, Physical Sidelink Feedback Channel, enthält.

8. UE (600) nach Anspruch 1, wobei der mindestens eine Prozessor so konfiguriert ist, dass er das UE veranlasst, eine Bitmap von Slots von einer Medium Access Control-Schicht, MAC, an eine physikalische Schicht, PHY, zu senden, und wobei die Bitmap von Slots aktivierte blinde Neuübertragungen und aktivierte HARQ-Feedback-basierte Übertragungen identifiziert.

9. UE (600) nach Anspruch 1, wobei der mindestens eine Prozessor so konfiguriert ist, dass er das UE veranlasst:

eine Anzahl von blinden Neuübertragungen und eine Anzahl von HARQ-Feedback-basierten Übertragungen zu bestimmen, um eine Zuverlässigkeitsanforderung zu erfüllen; und die Anzahl von blinden Neuübertragungen als Reaktion auf eine Änderung der Kanalüberlastung zu verringern.

10. Prozessor (605) zur drahtlosen Kommunikation, umfassend:

mindestens eine Steuerung, die mit mindestens einem Speicher gekoppelt und so konfiguriert ist, dass sie den Prozessor zu Folgendem veranlasst
Bestimmen einer minimalen Zeitlücke zwischen einer ersten Ressource für eine erste Übertragung einer hybriden automatischen Wiederholungsanforderung, Hybrid Automatic Repeat Request - HARQ, eines Transportblocks, TB, und einer zweiten Ressource für eine zweite HARQ-Übertragung des TB, wobei die minimale Zeitlücke eine Summe aus folgenden Elementen umfasst:
einer ersten Zeit zum Empfangen von HARQ-Feedback;
einer zweiten Zeit zum Bestimmen, ob eine erneute Übertragung des TB durchgeführt werden soll; und
einer dritten Zeit zum Durchführen der erneuten Übertragung des TB; und
Auswählen eines Satzes von Sidelink-Ressourcen, SL, für die erneute Übertragung des TB aus einem Satz von Kandidatenressourcen, mindestens teilweise basierend auf der minimalen Zeitlücke.

11. Prozessor (605) nach Anspruch 10, wobei die mindestens eine Steuerung ferner so konfiguriert ist, dass sie eine physikalische Schicht, PHY, veranlasst, den Kandidatenressourcensatz einer Medium Access Control-Schicht, MAC, anzuzeigen, und wobei die mindestens eine Steuerung zum Auswählen des Satzes von SL-Ressourcen ferner so konfiguriert ist, dass sie die MAC-Schicht veranlasst, die SL-Ressourcen mindestens teilweise basierend auf der minimalen Zeitlücke auszuwählen.

12. Verfahren, das an einem Benutzergerät, UE, (600) durchgeführt wird, wobei das Verfahren umfasst:

Bestimmen einer minimalen Zeitlücke zwischen einer ersten Ressource für eine erste Übertragung einer hybriden automatischen Wiederholungsanforderung, Hybrid Automatic Repeat Request - HARQ, eines Transportblocks, TB, und einer zweiten Ressource für eine zweite HARQ-Übertragung des TB; und
Auswählen eines Satzes von Sidelink-Ressourcen, SL, für eine erneute Übertragung des TB aus einem Satz von Kandidatenressourcen, mindestens teilweise basierend auf der minimalen Zeitlücke, wobei die minimale Zeitlücke eine Summe aus den folgenden Elementen umfasst:

einer ersten Zeit zum Empfangen von HARQ-Feedback;
einer zweiten Zeit zum Bestimmen, ob die erneute Übertragung des TB durchgeführt werden soll; und
einer dritten Zeit zum Durchführen der erneuten Übertragung des TB.

**Revendications**

1. **Équipement** utilisateur, UE, (600) pour communication sans fil, comprenant :

au moins une mémoire (610) ; et
au moins un processeur (605) couplé à l'au moins une mémoire et configuré pour amener l'UE à :

déterminer un écart temporel minimal entre une première ressource pour une transmission de demande de répétition automatique hybride, HARQ (pour « Hybrid Automatic Repeat Request »), d'un bloc de transport, TB (pour « Transport Block »), et une seconde ressource pour la transmission HARQ du TB, l'écart temporel minimal comprenant une somme de :

un premier temps pour recevoir la rétroaction HARQ ;

un deuxième temps pour déterminer s'il faut réaliser une retransmission du TB ; et

un troisième temps pour réaliser la retransmission du TB ; et

sélectionner, à partir d'un ensemble de ressources candidates, un ensemble de ressources de liaison latérale, SL (pour « sidelink »), pour la retransmission du TB, en fonction, au moins en partie, de l'écart temporel minimal.

2. UE (600) selon la revendication 1, dans lequel l'au moins un processeur est en outre configuré pour amener l'UE à fournir une couche physique, PHY (pour « physical »), et une couche de commande d'accès au support, MAC (pour « Medium Access Control »), dans lequel l'au moins un processeur est en outre configuré pour amener la couche PHY à indiquer l'ensemble de ressources candidates à la couche MAC, et dans lequel, pour sélectionner l'ensemble de ressources SL, l'au moins un processeur est en outre configuré pour amener la couche MAC à sélectionner les ressources SL en fonction, au moins en partie, de l'écart temporel minimal.

3. UE (600) selon la revendication 2, dans lequel, pour déterminer l'écart temporel minimal, l'au moins un processeur est configuré pour amener la couche PHY à déterminer l'écart temporel minimal, et dans lequel l'au moins un processeur est configuré pour amener la couche PHY à indiquer à la couche MAC un ou plusieurs créneaux temporels candidats dans lesquels la rétroaction SL HARQ est active pour une tentative de retransmission.

4. UE (600) selon la revendication 1, dans lequel l'au moins un processeur est configuré pour amener l'UE à sélectionner la première ressource pour la première transmission HARQ du TB et la seconde ressource pour la seconde transmission HARQ du TB en fonction de l'écart temporel minimal.

5. UE (600) selon la revendication 4, dans lequel l'au moins un processeur est configuré pour amener l'UE à fournir une couche de commande d'accès au support, MAC (pour « Medium Access Control »), configurée pour sélectionner la première ressource et la seconde ressource.

6. **UE (600)** selon la revendication 1, dans lequel l'au moins un processeur est configuré pour amener l'UE à activer la rétroaction HARQ pour le TB et à réaliser une sélection de ressources en réponse à l'activation de la rétroaction HARQ.

7. UE (600) selon la revendication 6, dans lequel, pour réaliser la sélection de ressources, l'au moins un processeur est configuré pour amener l'UE à commuter vers un pool de ressources contenant une ressource de canal physique de rétroaction de liaison latérale, PSFCH (pour « Physical Sidelink Feedback Channel »).

8. UE (600) selon la revendication 1, dans lequel l'au moins un processeur est configuré pour amener l'UE à envoyer une carte binaire de créneaux temporels depuis une couche de commande d'accès au support, MAC (pour « Medium Access Control »), vers une couche physique, PHY (pour « physical »), et dans lequel la carte binaire de créneaux temporels identifie les retransmissions aveugles actives et les transmissions actives basées sur la rétroaction HARQ.

9. UE (600) selon la revendication 1, dans lequel l'au moins un processeur est configuré pour amener l'UE à :

déterminer un nombre de retransmissions aveugles et un nombre de transmissions basées sur la rétroaction HARQ pour satisfaire à une exigence de fiabilité ; et

diminuer le nombre de retransmissions aveugles en réponse à une modification de l'encombrement de canal.

10. Processeur (605) pour communication sans fil, comprenant :

au moins un contrôleur couplé à au moins une mémoire et configuré pour amener le processeur à :

déterminer un écart temporel minimal entre une première ressource pour une transmission de demande de répétition automatique hybride, HARQ (pour « Hybrid Automatic Repeat Request »), d'un bloc de transport, TB (pour « Transport Block »), et une seconde ressource pour la transmission HARQ du TB, l'écart temporel minimal comprenant une somme de :

un premier temps pour recevoir la rétroaction HARQ ;

un deuxième temps pour déterminer s'il faut réaliser une retransmission du TB ; et

un troisième temps pour réaliser la retransmission du TB ; et

sélectionner, à partir d'un ensemble de ressources candidates, un ensemble de ressources de liaison latérale, SL (pour « sidelink »), pour la retransmission du TB, en fonction, au moins en partie, de l'écart temporel minimal.

11. Processeur (605) selon la revendication 10, dans lequel l'au moins un contrôleur est en outre configuré pour amener une couche physique, PHY (pour « physical »), à indiquer l'ensemble de ressources candidates à une couche de commande d'accès au support, MAC (pour « Medium Access Control »), et dans lequel, pour sélectionner l'ensemble de ressources **SL, l'au moins** un contrôleur est en outre configuré pour amener la couche MAC à sélectionner les ressources SL en fonction, au moins en partie, de l'écart temporel minimal.

12. Procédé réalisé au niveau d'un équipement utilisateur, UE (600), ledit procédé comprenant :

la détermination d'un écart temporel minimal entre une première ressource pour une transmission de demande de répétition automatique hybride, HARQ (pour « Hybrid Automatic Repeat Request »), d'un bloc de transport, TB (pour « Transport Block »), et une seconde ressource pour la transmission HARQ du TB ; et
la sélection, à partir d'un ensemble de ressources candidates, d'un ensemble de ressources de liaison latérale, SL (pour « sidelink »), pour une retransmission du TB en fonction, au moins en partie, de l'écart temporel minimal,
dans lequel l'écart temporel minimal comprend une somme de :

un premier temps pour recevoir la rétroaction HARQ ;
un deuxième temps pour déterminer s'il faut réaliser une retransmission du TB ; et
un troisième temps pour réaliser la retransmission du TB.

FIG. 1

200

## User Plane Protocol Stack 201

### UE 205 | gNB 207

| | | |
|---|---|---|
| 230 | SDAP ↔ SDAP | 230 |
| 225 | PDCP ↔ PDCP | 225 |
| 220 | RLC ↔ RLC | 220 |
| 215 | MAC ↔ MAC | 215 |
| 210 | PHY ↔ PHY | 210 |

## Control Plane Protocol Stack 203

### UE 205 | gNB 207 | AMF 209 (in 5GC)

| | | |
|---|---|---|
| 240 | NAS ↔ NAS | 240 |
| 235 | RRC ↔ RRC | 235 |
| 225 | PDCP ↔ PDCP | 225 |
| 220 | RLC ↔ RLC | 220 |
| 215 | MAC ↔ MAC | 215 |
| 210 | PHY ↔ PHY | 210 |

## FIG. 2A

## V2X Protocol Stack 250

### TX UE 251 | RX UE 253

| | | |
|---|---|---|
| 275 | RRC/SDAP ↔ RRC/SDAP | 275 |
| 270 | PDCP ↔ PDCP | 270 |
| 265 | RLC ↔ RLC | 265 |
| 260 | MAC ↔ MAC | 260 |
| 255 | PHY ↔ PHY | 255 |

PC5

## FIG. 2B

300

```
┌─────────────────────────┐
│ Continue decoding other │
305 │ UE's PSCCH and measuring│
│ corresponding PSSCH     │
│ energy                  │
└─────────────────────────┘
           │
           ▼
┌─────────────────────────┐
│ Collect sensing         │
310 │ information including   │
│ reserved resources and  │
│ SL-RSRP measurements    │
└─────────────────────────┘
           │
           ▼
┌─────────────────────────┐
│ Exclude own, and high-  │
315 │ energy resources, and   │
│ form candidate resource │
│ set                     │
└─────────────────────────┘
           │
           ▼
┌─────────────────────────┐      ┌──────────────────────┐
│ Select Tx resources     │      │ Higher layer parameter│
320 │ semi-persistently, or   │      │ indicates requirement │
│ up to maximum           │──────│ for minimum time gap  │
│ reservations, with start│      │ between consecutive   │
│ time 'm'                │      │ resources             │
└─────────────────────────┘      └──────────────────────┘
           │
           ▼
┌─────────────────────────┐
325 │ Re-evaluate resource    │
│ selection               │
└─────────────────────────┘
           │
           ▼
        Re-selection        Yes
330      triggered? ───────────────┐
           │ No
           ▼
┌─────────────────────────┐
335 │ Begin transmitting      │
└─────────────────────────┘
           │
340        ▼
        Resource
        re-selection?
Yes – Restart          No – Continue
process                using reservation
```

# FIG. 3

400

Restriction on the number of
outstanding reserved resources
based on priority of packet
transmission, number of re-
transmission for a TB, remaining
PDB, MCR, and CSI reports

$m$

reservation(s)

$T_{proc,0}$

$T1$

|←sensing window 401→|

|←selection window 403————————→|

$T0$

$T2$, $T2_{min} \leq T2 \leq$ remaining PDB

$n$

## FIG. 4A

Resource (re)selection
trigger during resource re-
evaluation step before (or
at) $m$-$T3$ informing UE to
reselect resources based on
the minimum time gap

Condition for transmission on
the reserved resource based
on the priority value
comparison, otherwise CBR
value, CSI reports etc.

410

$n$

$m$

$m'$

$T3$

$T3$

reservation(s)

|←sensing window 401→|

|←————re-selection window 411————→|

## FIG. 4B

500

```
505 ──▷  ┌─────────────────────────────┐
         │   Receive a sidelink grant  │
         └─────────────────────────────┘
                        │
                        ▼
510 ──▷  ┌─────────────────────────────┐
         │      Select a destination   │
         └─────────────────────────────┘
                        │
                        ▼
515 ──▷  ┌─────────────────────────────┐
         │  Select a retransmission mode │
         │  based on a minimum time gap │
         └─────────────────────────────┘
                        │
                        ▼
520 ──▷  ┌─────────────────────────────┐
         │       Select resources for  │
         │  (re)transmission of sidelink TB │
         └─────────────────────────────┘
                        │
                        ▼
525 ──▷  ┌─────────────────────────────┐
         │   Perform (re)transmissions │
         └─────────────────────────────┘
```

# FIG. 5

User Equipment Apparatus
600

Processor
605

Memory
610

Input Device
615

Output Device
620

Transceiver 625

Transmitter
630

Receiver
635

Network Interface(s)
640

Application Interface(s)
645

# FIG. 6

Network Apparatus
700

Processor
705

Memory
710

Input Device
715

Output Device
720

Transceiver 725

Transmitter
730

Receiver
735

Network Interface(s)
740

Application Interface(s)
745

FIG. 7

800

Start

805  Determine a minimum time duration between a first resource for HARQ transmission of the TB and a second resource for HARQ transmission of the TB

810  Select a retransmission mode based on the minimum time duration, wherein the retransmission mode comprises one of: a blind retransmission mode and a HFBT mode

815  Select sidelink resources for retransmission of the TB based on the selected retransmission mode

End

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63024425, Karthikeyan Ganesan, Prateek Basu Mallick, Joachim Loehr, and Ravi Kuchibhotla

- WO IB2021053175 A, Prateek Basu Mallick, Karthikeyan Ganesan, Joachim Loehr, and Ravi Kuchibhotla